# EUROPEAN PATENT APPLICATION

(11) **EP 2 439 672 A2**
(43) Date of publication of application: **11.04.2012**
(21) Application number: 11182889.3
(22) Date of filing: 27.09.2011
(51) Int. Cl.: G06F 21/00

(54) **Information processing apparatus, information processing method, and program**

(30) Priority: 08.10.2010 JP 2010228736
(71) Applicant: Sony Corporation, Tokyo 108-0075 (JP)
(72) Inventor: Kato, Motoki, Minato-ku, Tokyo 108-0075 (JP); Ueda, Kenjiro, Minato-ku, Tokyo 108-0075 (JP); Kobayashi, Yoshiyuki, Minato-ku, Tokyo 108-0075 (JP); Kuno, Hiroshi, Minato-ku, Tokyo 108-0075 (JP); Yoshimura, Koji, Minato-ku, Tokyo 108-0075 (JP); Hayashi, Takamichi, Minato-ku, Tokyo 108-0075 (JP)
(74) Representative: Lewis, Darren John

(57) **Abstract**

An information processing apparatus includes: a data processor which creates content to be distributed to a client, wherein the data processor executes processing of creating content provided to a client by selecting data in units of segments, which are division data of content, from a plurality of additional information recorded content items obtained by recording different additional information items on original content, selects different segment columns in units of content distribution clients in the processing of creating content provided to a client, and creates management information in which client information for identifying a client of a content distribution destination and segment column information indicating a segment selection state of the content provided to a client, which is provided to a corresponding client, are matched with each other and records the management information in a storage unit.

## Description

The present disclosure relates to an information processing apparatus, an information processing method, and a program. In particular, the present disclosure relates to an information processing apparatus, an information processing method, and a program used in a system capable of preventing the unauthorized use of content or tracking the source of illegally distributed content.

In recent years, data communication through a network, such as the Internet, has become popular, and a large amount of image data, music data, and the like are actively distributed through a network.

For lots of content, such as image data or music data, its creator or dealer holds the copyright, the right of distribution, and the like, Accordingly, for example, when a service provider provides the content to users from its server through a network, it is common to perform control to permit only users with legitimate rights to use the content.

As a specific example of the control, the content is transmitted as encrypted content and this encrypted content can be decrypted only by an encryption key provided to a user who purchased the content legitimately. However, even if such processing is performed, unauthorized use of the content by many unspecified persons occurs if the content decrypted by a user who acquired the encrypted content or the encryption key is illegally distributed or opened to the public, for example. Particularly, in recent years, there are many cases where data is illegally distributed or opened to the public through the network. Accordingly, it is a big issue to prevent such illegal acts.

A specific example of illegal distribution of an encryption key or content will be described with reference to the accompanying drawings.

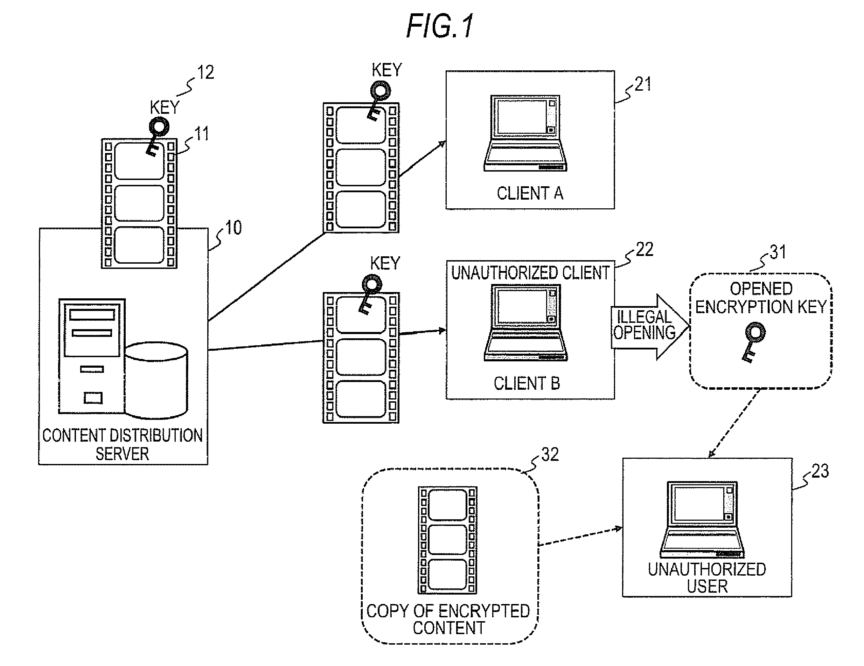

Fig. 1 is a view showing an example of illegal opening of an encryption key. A content distribution server 10 provides encrypted content 11, which is encrypted by applying an encryption key 12, together with the encryption key 12 to a client A 21 and a client B 22 who have executed the legitimate content purchasing procedure.

These client A 21 and client B 22 can reproduce the content by decrypting the encrypted content 11 by applying the encryption key 12.

Here, it is assumed that the client B 22 opens the encryption key 12 to the public through a site on a network accessible by any one, for example.

If such processing of opening a key to the public is executed, an opened encryption key 31 can be acquired by many unspecified users.

As a result, for example, the opened encryption key 31 is acquired through a network by an unauthorized user 23 who did not purchase the content legitimately. In addition, it is possible to acquire a copy 32 of the encrypted content from another client or the like and to reproduce the content by decrypting the copy 32 of the encrypted content by applying the opened encryption key 31.

When such a situation occurs, unauthorized use of the content spreads.

In an example shown in Fig. 1, the same encryption key is provided to all clients. Accordingly, if one person opens the key to the public illegally, all the content provided to other clients can be decrypted by the illegally opened key. In addition, it is difficult to specify a client who opened the key to the public illegally.

As a method for solving such a problem, a configuration is effective in which encrypted content items provided to clients are encrypted with different encryption keys.

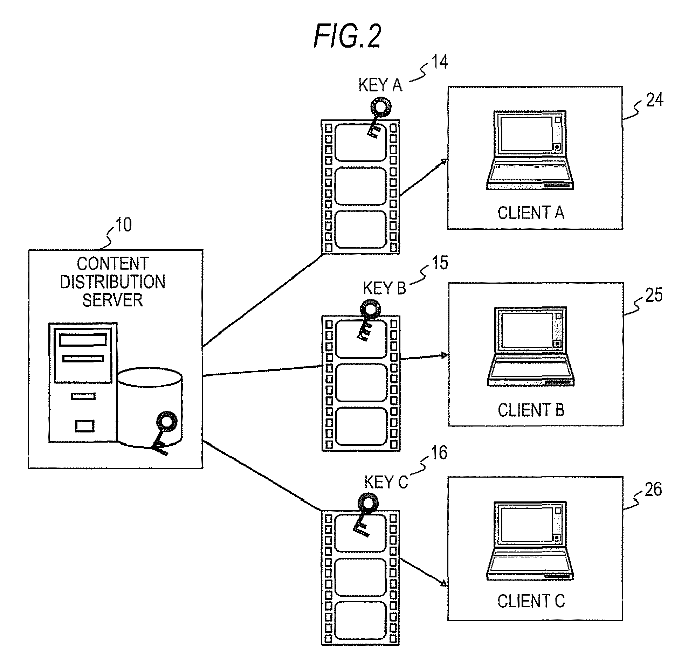

That is, as shown in Fig. 2, the content distribution server 10 provides a client A 24 with the encrypted content, which is encrypted by applying an encryption key A 14, together with the encryption key A 14. In addition, the content distribution server 10 provides a client B 25 with the encrypted content, which is encrypted by applying an encryption key B 15, together with the encryption key B 15. In addition, the content distribution server 10 provides a client C 26 with the encrypted content, which is encrypted by applying an encryption key C 16, together with the encryption key C 16.

In the case of such setting, if one of the encryption keys is opened to the public, the content which can be decrypted with the opened key is limited to one encrypted content item which is encrypted by the opened key. Accordingly, it becomes possible to specify the source which opened the key to the public, that is, a client who opened the encryption key to the public.

In order to change an encryption key in units of clients as described above, however, the content distribution server 10 should create different encrypted content items in units of clients. In this case, a problem in that the processing load at the server side is increased occurs.

Although an encryption key applied for content encryption and decryption processing is illegally opened in the example described with reference to Figs. 1 and 2, not only the encryption key but also the decrypted content may be opened to the public.

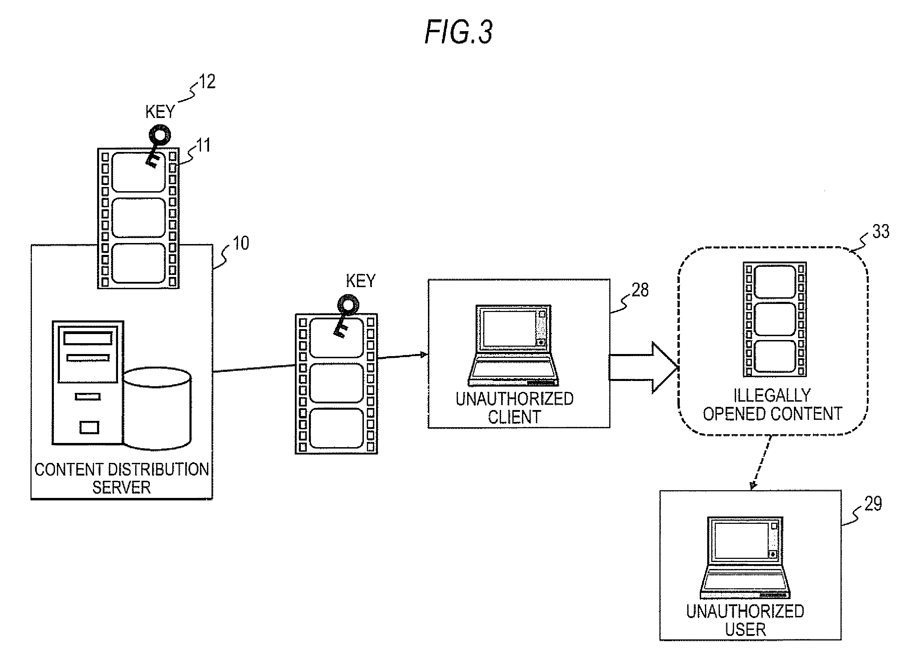

Fig. 3 shows an example of illegal opening of the decrypted content.

The content distribution server 10 provides a client 28 with the encrypted content 11 encrypted by applying the encryption key 12. This providing processing is executed as legitimate content purchasing processing.

However, if the client 28 decrypts the encrypted content 11 by applying the encryption key 12 and opens the decrypted content 11 illegally, the illegally opened content 33 can be used by many unspecified users including an unauthorized user 29 shown in Fig. 3 as a result.

If the decrypted content is opened to the public in this way, unauthorized use of the decrypted content spreads even if the encryption key is changed in units of clients. In addition, it is not possible to specify a client who opened the decrypted content to the public illegally.

In view of the above, it is desirable to provide an information processing apparatus, an information processing method, and a program capable of specifying a source which opens the content to the public illegally.

It is also desirable to provide an information processing apparatus, an information processing method, and a program capable of realizing a configuration, through which it is possible to specify a source which opens the content to the public illegally, without increasing the processing load of a server excessively.

Various respective aspects and features of the invention are defined in the appended claims. Combinations of features from the dependent claims may be combined with features of the independent claims as appropriate and not merely as explicitly set out in the claims.

One embodiment of the present disclosure is directed to an information processing apparatus including a data processor which creates content to be distributed to a client. The data processor executes processing of creating content provided to a client by selecting data in units of segments, which are division data of content, from a plurality of additional information recorded content items obtained by recording different additional information items on original content, selects different segment columns in units of content distribution clients in the processing of creating content provided to a client, and creates management information in which client information for identifying a client of a content distribution destination and segment column information indicating a segment selection state of the content provided to a client, which is provided to a corresponding client, are matched with each other and records the management information in a storage unit.

In one embodiment of the information processing apparatus, the data processor may set a data extraction region in units of segments, which are division data of content, and replace data of the data extraction region with dummy data and may also encrypt sub-content, which includes only the data of the data extraction region, with an individual key unique to a client of the content distribution destination and provide the encrypted sub-content to the client.

In one embodiment of the information processing apparatus, the data processor may record correspondence information between the client information for identifying a client of the content distribution destination and the individual key in the management information.

In one embodiment of the information processing apparatus, the additional information may be recorded as digital watermark data.

In one embodiment of the information processing apparatus, the data processor may acquire a segment column of distributed content by processing of analyzing additional information included in the distributed content and specify a client as a content distribution destination by processing of collating the acquired segment column information with registration information of the management information.

In one embodiment of the information processing apparatus, the data processor may specify a client as an individual key distribution destination by processing of collating a distributed individual key with registration information of the management information.

In one embodiment of the information processing apparatus, the data processor may hold a plurality of different digital watermark recorded content items in which different digital watermark data items are recorded in units of segments, which are division data of content, and create content, in which a digital watermark data column in units of segments serving as client identification information is set, by selecting segments of different combinations from the plurality of different digital watermark recorded content items in units of distribution processing for the client.

In one embodiment of the information processing apparatus, the data processor may create main encrypted content, which is obtained by setting a data extraction region in units of segments that are division data of content and by encrypting main content having data of the data extraction region replaced with dummy data using a common key common to a plurality of clients, and encrypted sub-content, which is obtained by encrypting sub-content including only the data of the data extraction region using an individual key unique to a client of the content distribution destination.

In one embodiment of the information processing apparatus, the data processor may create the content provided to a client by executing processing of combining the main encrypted content with the encrypted sub-content.

In one embodiment of the information processing apparatus, the data processor may create region information, which indicates a data region of the main encrypted content and a data region of the encrypted sub-content, as information provided to a client.

Another embodiment of the present disclosure is directed to an information processing apparatus including a data processor which executes content reproduction processing. The data processor executes content combining processing of combining main content, in which a dummy data region is set in units of segments that are division data of content, with sub-content, which is content corresponding to the dummy data region, and reproduces combined content obtained as a combining result.

In one embodiment the information processing apparatus, an encryption key of the main content and an encryption key of the sub-content may be different keys, and the data processor may acquire region information indicating a data region of the main content and a data region of the sub-content and perform processing of switching an applied key with reference to the region information.

Still another embodiment of the present disclosure is directed to an information processing method executed in an information processing apparatus. The method includes: executing processing of creating content provided to a client by selecting data in units of segments, which are division data of content, from a plurality of additional information recorded content items obtained by recording different additional information items on original content; selecting different segment columns in units of content distribution clients in the processing of creating content provided to a client; and creating management information in which client information for identifying a client of a content distribution destination and segment column information indicating a segment selection state of the content provided to a client, which is provided to a corresponding client, are matched with each other and recording the management information in a storage unit. All of the above processing is executed by a data processor.

Yet another embodiment of the present disclosure is directed to a program allowing an information processing apparatus to execute information processing. The program causes a data processor to execute: processing of creating content provided to a client by selecting data in units of segments, which are division data of content, from a plurality of additional information recorded content items obtained by recording different additional information items on original content; processing of selecting different segment columns in units of content distribution clients in the processing of creating content provided to a client; and processing of creating management information in which client information for identifying a client of a content distribution destination and segment column information indicating a segment selection state of the content provided to a client, which is provided to a corresponding client, are matched with each other and recording the management information in a storage unit.

The program according to the embodiment of the present disclosure is a program that may be provided by communication media or storage media provided in a computer-readable format to an information processing apparatus or a computer system capable of executing various programs or codes, for example. By providing such a program in the computer-readable format, processing corresponding to the program is realized by the information processing apparatus or the computer system.

Other purposes, characteristics, and advantages of the present disclosure will be apparent by more detailed explanation made with reference to the accompanying drawings in the following embodiments of the present disclosure. In addition, a system in this specification is a logic group of a plurality of apparatuses. That is, the system in this specification is not limited to a system in which apparatuses having respective configurations are present in the same housing.

According to the embodiments of the present disclosure, a configuration allowing verifying the source from the illegally distributed content is provided. In the configuration according to the embodiments of the present disclosure, the content provided to a client is created by selecting data in units of segments from a plurality of additional information recorded content items obtained by recording different additional information items on the content. Different segment columns are selected in units of clients, the management information in which the client information and the segment column information are matched with each other is created, and a client of the content distribution source is specified on the basis of a segment column of the illegally distributed content. In addition, the main encrypted content, which is obtained by setting a data extraction region in units of segments, replacing the data of the data extraction region with dummy data, and performing encryption using a common key, and encrypted sub-content, which is obtained by encrypting the data of the data extraction region using an individual key unique to a client of the content distribution destination, are created and provided to a client.

Through this configuration, it is possible to specify a client, which is a distribution source, on the basis of an individual key or a segment column of both the distributed content items.

Embodiments of the invention will now be described with reference to the accompanying drawings, throughout which like parts are referred to by like references, and in which:
Fig. 1 is a view for explaining an example of unauthorized use of the content by illegal opening of an encryption key;
Fig. 2 is a view for explaining an example of unauthorized use of the content by illegal opening of an encryption key;
Fig. 3 is a view for explaining an example of unauthorized use of the content by illegal opening of decrypted content;
Fig. 4 is a view for explaining the outline of an embodiment of the present disclosure;
Fig. 5 is a view for explaining a specific example of the content provided by a server;
Fig. 6 is a view for explaining a specific example of the content provided by a server;
Fig. 7 is a view for explaining a specific example of processing executed when a server creates the content to be provided to a client;
Fig. 8 is a view for explaining a specific example of processing executed when a server creates the content to be provided to a client;
Fig. 9 is a view for explaining a specific example of processing executed when a server creates the content to be provided to a client;
Fig. 10 is a view for explaining a specific example of processing executed when a server creates the content to be provided to a client;
Fig. 11 is a view for explaining a specific example of processing executed when a server creates the content to be provided to a client;
Fig. 12 is a view for explaining a specific example of processing executed when a server creates the content to be provided to a client;
Fig. 13 is a view for explaining an example of setting a unique ID in units of distribution content;
Fig. 14 is a view for explaining a specific example of digital watermark data including a unique ID, an MAC, and an ECC in units of distribution content;
Fig. 15 is a view for explaining a specific example of digital watermark data including a unique ID, an MAC, and an ECC in units of distribution content;
Fig. 16 is a view for explaining an example of the data configuration of management information stored in a storage device of a server;
Fig. 17 is a view for explaining the configuration and processing of a server;
Fig. 18 is a view for explaining the configuration and processing of a server;
Fig. 19 is a view for explaining an example of content distribution processing by a CDN (Contents Distribution Network) using a plurality of cache servers;
Fig. 20 is a view for explaining an example of content distribution processing by a CDN using a plurality of cache servers;
Fig. 21 is a view for explaining an example of content reproduction processing in a client;
Fig. 22 is a view showing the flow chart for explaining the content creation processing sequence executed in a server of a service provider or the like;
Fig. 23 is a view showing the flow chart for explaining the content providing processing sequence executed in a server of a service provider or the like;
Fig. 24 is a view for explaining content reproduction processing in a client;
Fig. 25 is a view showing the flow chart for explaining the source determination processing sequence executed when the illegally distributed content is found;
Fig. 26 is a view for explaining the hardware configuration of a server;
   and
Fig. 27 is a view for explaining the hardware configuration of a client.

Hereinafter, an information processing apparatus, an information processing method, and a program according to embodiments of the present disclosure will be described in detail with reference to the accompanying drawings. In addition, explanation will be given according to the following items.
1. Outline of the present disclosure
2. Specific example of content providing processing of a server
3. Processing of specifying a client, who opens the content to the public illegally, on the basis of illegally opened content
4. Configuration and processing of a server
5. Content distribution processing using CDN
6. Content reproduction processing in a client
7. Content creation and providing processing sequence in a server 7-1. Content creation processing sequence in a server 7-2. Content providing processing sequence in a server
8. Content reproduction sequence in a client
9. Source determination processing sequence based on illegally distributed content in a server
10. Example of the hardware configuration of each apparatus

### [1. Outline of the present disclosure]

Hereinafter, an information processing apparatus, an information processing method, and a program according to embodiments of the present disclosure will be described in detail with reference to the accompanying drawings.

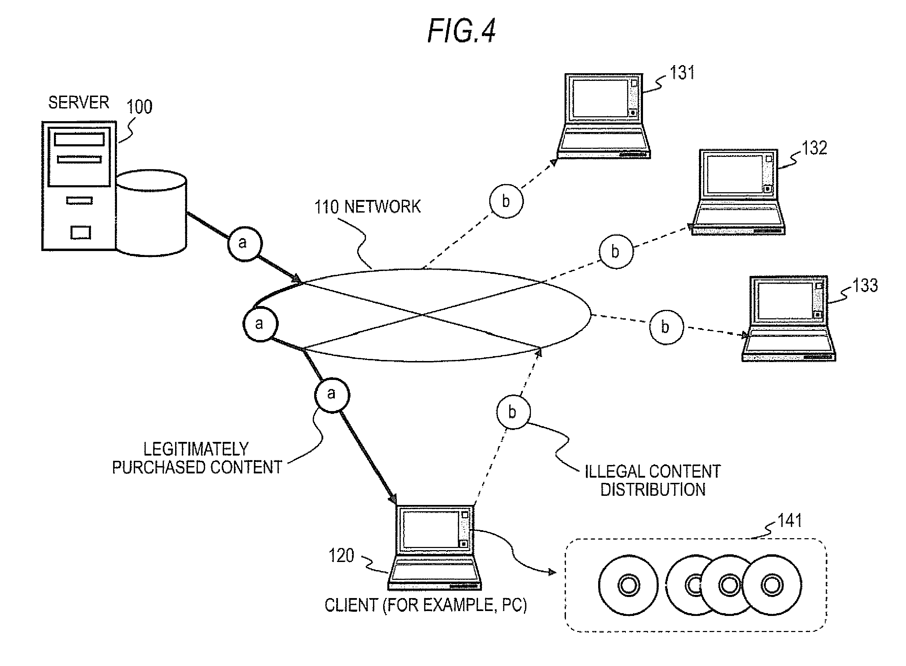

First, the outline of the embodiment of the present disclosure will be described with reference to Fig. 4. The embodiment of the present disclosure is to specify the source of the illegal content distributed on a network, for example.

Fig. 4 shows a server 100 managed by a service provider which provides the content, such as a movie or music.

For example, a client 120, such as a PC, accesses the server 100, and executes the legitimate content purchasing procedure to acquire the content. Legitimate content is acquired through the root a on the network shown in Fig. 4.

For a user of the client 120, processing of reproducing the legitimately purchased content under predetermined use limitation is allowed. For example, even when the distributed content is encrypted content, the legitimate purchaser can reproduce the encrypted content by decrypting the encrypted content by applying a decryption key provided from the server.

However, the user of the client 120 may provide the decrypted content to other users (users of clients 131 to 133 shown in Fig. 4) illegally through a network. For example, a situation may occur in which the user of the client 120 provides the decrypted content to many unspecified users through a path (b) on the network shown in Fig. 4. For example, this is a processing of placing the decrypted content on a site on the network which many unspecified users may access.

In addition, the user of the client 120 may illegally record the decrypted content on media, such as a disc, to create a large amount of illegally copied recording media and provide them to other users. For example, this is a disc 141 shown in Fig. 4.

The present disclosure makes it possible to specify the source of illegal content when the distribution of such illegal content is found. In the case shown in Fig. 4, this source is the client 120. In addition, such a configuration is realized without excessively increasing the processing load of the server 100.

### [2. A specific example of content providing processing of a server]

As described above, the present disclosure makes it possible to track the source of illegal content. In order to realize this processing, the server 100 which provides the legitimate content creates the content with a special configuration and provides it to clients.

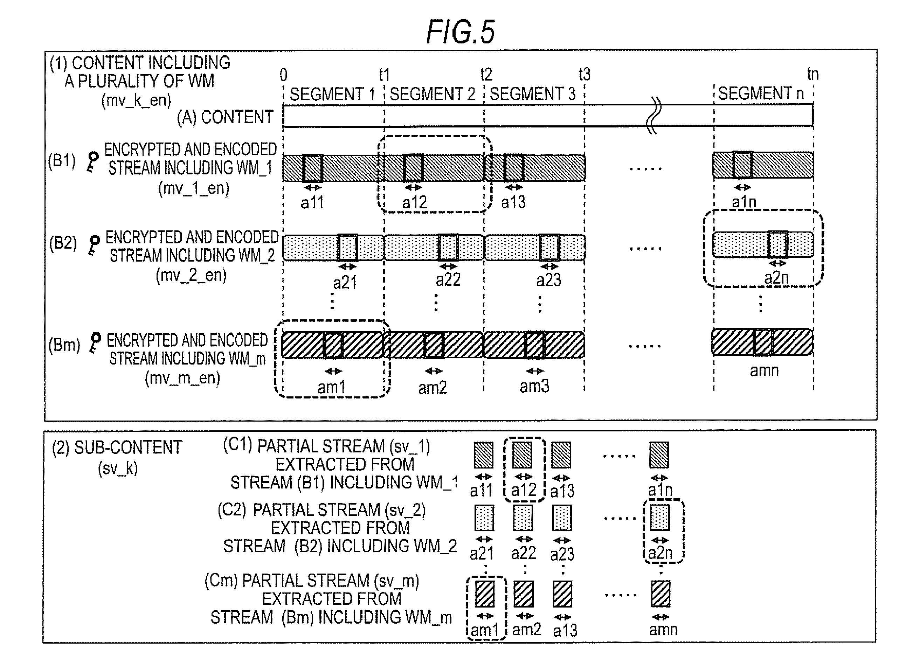

A specific example of the content providing processing in a server managed by a service provider or the like will be described with reference to Fig. 5 and the like. A server creates the special content for specifying a client or a user who opens the content to the public illegally or distributes the content illegally and provides it to each client.

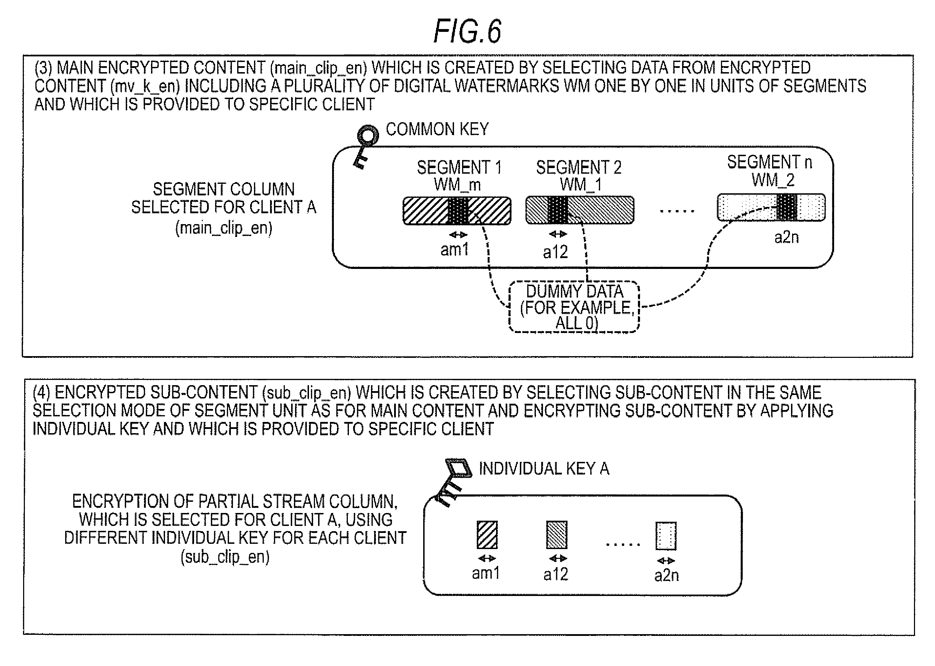

Figs. 5 and 6 are views for explaining the outline of the content that a server provides to a client.

The server creates the content to be provided to each client on the basis of the encrypted content mv_k_en (where, k = 1 to m) including a plurality of digital watermarks WM, which is shown in (1) of Fig. 5, and sub-content sv_k, which is shown in (2) of Fig. 5.

The encrypted content items mv_k_en (where, k = 1 to m) including the plurality of digital watermarks WM shown in (B1) to (Bm) of (1) of Fig. 5 are original content as original data, such as a movie. That is, they are the content obtained by recording digital watermarks on the content shown in (A) of Fig. 5.

In (B1) to (Bm), different digital watermark data items (for example, numeric data 1 to m) are recorded in units of segments which are divided data of content, encoding such as MPEG compression processing is performed, and the content encrypted by one common encryption key is created.

The sub-content sv_k in (2) of Fig. 5 is some content columns extracted from segments of the encrypted content mv_k_en including the plurality of digital watermarks WM shown in (B1) to (Bm) of (1) in Fig. 5.

The sub-content sv_k in (2) of Fig. 5 includes data regions all to amn described in segments of the data shown in (B1) to (Bm) of (1) in Fig. 5.

Specifically, the sub-content shown in (2) of Fig. 5 is the following data.
(C1) Partial stream sv_1 extracted from the stream (B1) including a digital watermark WM_1 (formed by data regions all to aln)
(C2) Partial stream sv_2 extracted from the stream (B2) including a digital watermark WM_2 (formed by data regions a21 to a2n)
.
.
(Cm) Partial stream sv_m extracted from the stream (Bm) including a digital watermark WM_m (formed by data regions aml to amn)

The server creates the content to be provided to each client on the basis of the content shown in (1) and (2) of Fig. 5.

Fig. 6 shows an example of the content provided to a specific client. Here, an example of the content provided to a client A is shown.

Main encrypted content main_clip_en shown in (3) of Fig. 6 and encrypted sub-content sub_clip_en shown in (4) of Fig. 6 are the content provided to the client A.

In addition, the encrypted sub-content sub_clip_en shown in (4) of Fig. 6 is encrypted data of the right content corresponding to some missing parts (parts replaced with dummy data) of the main encrypted content main__clip_en shown in (3) of Fig. 6.

It is possible to reproduce the content by combining the main encrypted content main_clip_en shown in (3) of Fig. 6 with the encrypted sub-content sub_clip_en shown in (4) of Fig. 6.

In addition, the server may execute combining processing to acquire the combined content and provide the acquired combined content to each client. Alternatively, the server may provide the main encrypted content main_clip_en shown in (3) of Fig. 6 and the encrypted sub-content sub_clip_en shown in (4) of Fig. 6 separately to each client instead of executing the combining processing by itself so that the combining processing is executed at the client side.

In the case of executing the combining processing at the client side, the combining processing may be executed when downloading the content and the combining result may be stored in a storage unit, or the combining processing may be executed at the time of reproduction processing without executing the combining processing at the time of downloading.

In addition, the main encrypted content main_clip_en shown in (3) of Fig. 6 is the content encrypted using a common encryption key for a plurality of clients, while the encrypted sub-content sub_clip_en shown in (4) of Fig. 6 is encrypted using different encryption keys (individual keys) in units of clients to whom the content is distributed or in units of content distribution processing.

The main encrypted content main_clip_en shown in (3) of Fig. 6 is content created by selecting the data from the encrypted content mv_k_en including the plurality of digital watermarks WM shown in (B1) to (Bm) of (1) in Fig. 5, one by one in units of segments.

A combination of segments selected changes with each client. The main encrypted content main_clip_en shown in (3) of Fig. 6 is main encrypted content main_clip_en provided to a specific client (client A) . An example of content combination in units of segments, which is shown by a dotted frame in (1) of Fig. 5, is shown in (3) of Fig 6.

A segment 1 is a segment of (Bm) shown in (1) of Fig. 5.

A segment 2 is a segment of (B1) shown in (1) of Fig. 5.

A segment n is a segment of (B2) shown in (1) of Fig. 5.

This segment column is set as a unique segment column for the client A, and the server creates and holds the management information in which the segment column information and the client information are matched with each other.

The encrypted sub-content sub_clip_en shown in (4) of Fig. 6 is created by selecting the sub-content in the same selection mode (dotted frame shown in (2) of Fig. 5) of the segment unit as for the main encrypted content main_clip_en shown in (3) of Fig. 6 and encrypting the sub-content by applying an individual key. This encrypted sub-content sub_clip_en is provided to a specific client (client A).

The individual key which is an encryption key to the sub-content is set as a different key in units of clients or content distribution processing.

The data of main encrypted content main_clip_en and encrypted sub-content sub_clip_en shown in (3) and (4) of Fig. 6 is created as unique data in units of clients or content distribution processing and is provided to a specific client (for example, the client A).

Hereinafter, processing executed by a server will be described according to the processing sequence.

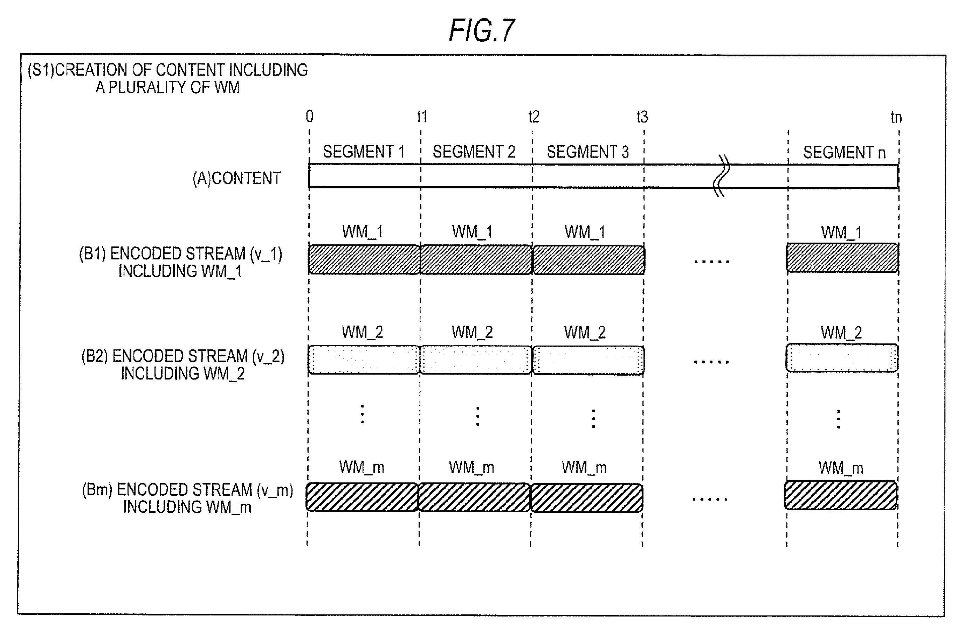

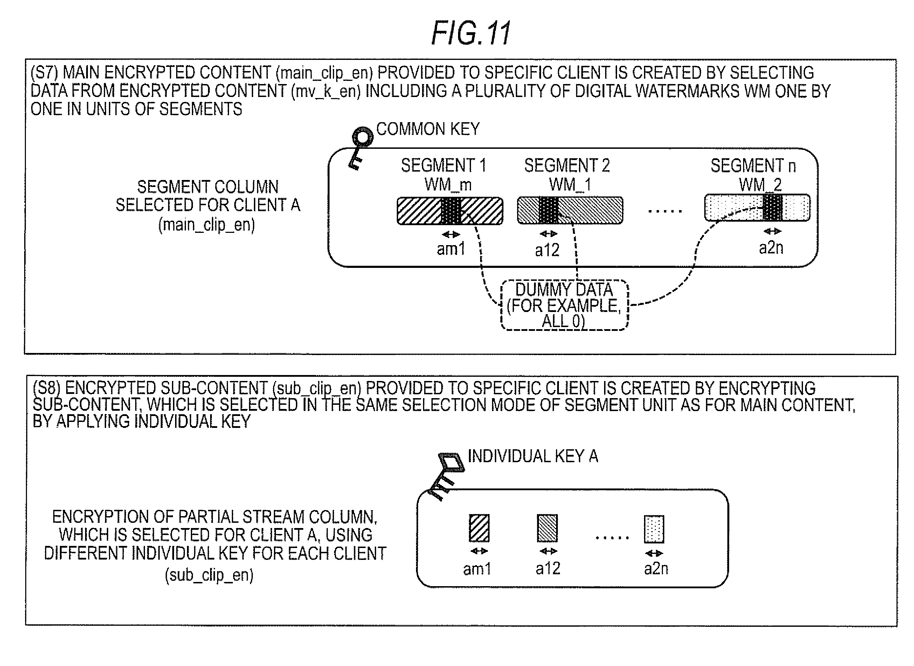

Processing of step 1 (S1) shown in Fig. 7 to step 8 (S8) shown in Fig. 11 will be described in a sequential manner.

### (Step 1 (S1))

First, processing of step 1 (S1) shown in Fig. 7 will be described.

This processing is a processing of creating the encrypted content v_k (where, k = 1 to m) including the plurality of digital watermarks WM from the original content.

The server creates each item of the data of (B1) to (Bm) on the basis of the original content shown in (A) of Fig. 7.

The content (with no digital watermark recorded) shown in (A) of Fig. 7 is original content and is content, such as a movie, for example. Moreover, in Fig. 7, reproduction time t0, t1, t2, ... are shown from left to right. Here, reproduction time t1 to tn indicates a reproduction time of video content, for example.

The server creates the data of (B1) to (Bm) shown in Fig. 7, in which the information applied to identify a client to whom the content is distributed is recorded, for the content (with no digital watermark recorded) shown in (A) of Fig. 7.

Specifically, the server creates the content recorded with "m" kinds of digital watermarks WM shown in (B1) to (Bm) of Fig. 7. Then, the server executes predetermined encoding processing (for example, MPEG compression) after the digital watermark recording processing to create the encoded content v_1 to v_m recorded with digital watermarks shown in (B1) to (Bm) of Fig. 7, respectively.

First, the server records different digital watermark patterns for the content shown in (A) of Fig. 7 to create the following content recorded with a plurality of digital watermarks.

Content recorded with a first digital watermark Matermark_1 shown in (B1), content recorded with a second digital watermark Watermark_2 shown in (B2), ..., and content recorded with an n-th digital watermark Watermark_m shown in (Bm) are created as the content recorded with a plurality of digital watermarks.

Then, the server executes predetermined encoding processing (for example, MPEG compression) after the digital watermark recording processing to create the encoded content v_1 to v_m recorded with digital watermarks shown in (B1) to (Bm) of Fig. 7, respectively.

The plurality of content items shown in (B1) to (Bm) are divided into segments as shown in the drawing. One segment includes one or more image frames.

For example, as shown in Fig. 7, reproduction time t0 to t1 is set as a first segment, reproduction time t1 to t2 is set as a second segment, and reproduction time t2 to t3 is set as a third segment, .... Thus, the content shown in (A) to (Bm) is divided into segments at the same separation positions (t0, t1, t2, ...).

In addition, although it is necessary to set the separation positions (t0, t1, t2,) of each content shown in (B1) to (Bm) of Fig. 7 at the same positions, it is not necessary to set the sizes of the first second, the second segment, the third segment, ... to be equal.

Each digital watermark recorded content shown in (B1) to (Bm) of Fig. 7 is created as content recorded with the following digital watermark data, for example.

Specifically, the digital watermark recorded content shown in (B1) is created as first digital watermark watermark_1 recorded content in which digital watermark data 1 is recorded.

The digital watermark recorded content shown in (B2) is created as second digital watermark watermark_2 recorded content in which digital watermark data 2 is recorded.

The digital watermark recorded content shown in (Bm) is created as m-th digital watermark Watermark_m recorded content in which digital watermark data m is recorded.

In addition, it is possible to use various kinds of methods in the related art to record a digital watermark. Specifically, information indicating whether or not a digital watermark is recorded and any of the digital watermark data 1 to m are recorded in a high-frequency region of an image of the content, for example. This data is low-level data which is not observable with the naked eye in image reproduction processing using a general reproduction apparatus of a user, and is also low-level data which can be detected by digital watermark detection processing using a digital watermark detector.

After the digital watermark recording processing, the server executes predetermined encoding processing (for example, MPEG compression).

As a result, the encoded digital watermark recorded content v_1 to v_m, in which "m" different digital watermarks shown in Fig. 7 are recorded, is created.

That is, "m" different encoded digital watermark recorded content items v_1 to v_m are created including (B1) v_1: first digital watermark Watermark_1 recorded content in which the digital watermark data 1 is recorded in each segment, (B2) v_2: second digital watermark Watermark_2 recorded content in which the digital watermark data 2 is recorded in each segment, ..., and (Bm) v_m: m-th digital watermark Watermark_m recorded content in which the digital watermark data m is recorded in each segment.

Then, the server extracts some of the data of the segments of the "m" different encoded digital watermark recorded content items v_1 to v_m.

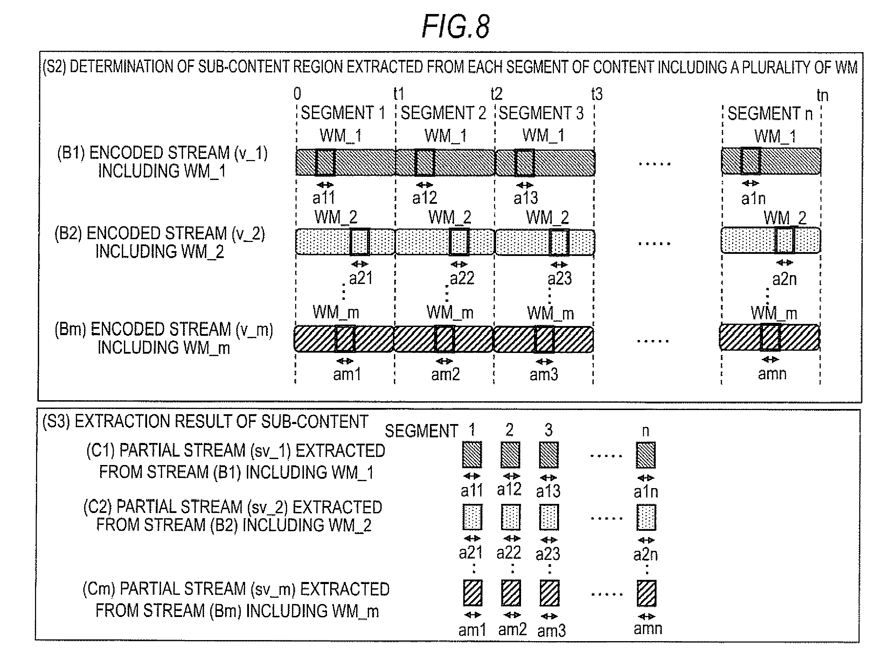

This processing will be described with reference to Fig. 8.

### (Steps 2 and 3 (S2 and S3))

Next, processing of steps 2 and 3 (S2 and S3) shown in Fig. 8 will be described.

Fig. 8 is a view for explaining the processing of extracting the partial data (sub-content) from each segment of the "m" different encoded digital watermark recorded content items v_1 to v_m.

Fig. 8 shows processing in two steps of (step 2 (S2)) determination of a sub-content region extracted from each segment of the content including the plurality of digital watermarks WM and (step 3 (S3)) extraction result of sub-content.

First, as shown in Fig. 8 (S2), the server determines a sub-content region extracted from each segment of the content v_1 to v_m including the plurality of digital watermarks WM.

The server extracts a predetermined portion from each segment in each video stream. Although the extraction position is arbitrary, it is preferable to select a scene of video content attractive to a user and to extract it in the GOP unit as a unit of encoding processing, for example.

In addition, the extraction positions of sub-content may be different positions changing with the segments of "m" different digital watermark recorded content items v_1 to v_m or may be the same positions.

The extracted content (partial stream) which is extracted in the segment unit of "m" different digital watermark recorded content items v_1 to v_m is assumed to be the sub-content.

As a result, as shown in Fig. 8 (S3), "m" partial streams (sub-content) corresponding to the content v_1 to v_m including the plurality of digital watermarks WM, that is, the following data is created.

Specifically, a partial stream sv_1 extracted from the stream B1 including a digital watermark WM_1 which is shown in (C1), a partial stream sv_2 extracted from the stream B2 including a digital watermark WM_2 which is shown in (C2), and a partial stream sv_m extracted from the stream Bm including a digital watermark WM_m which is shown in (Cm) are created.

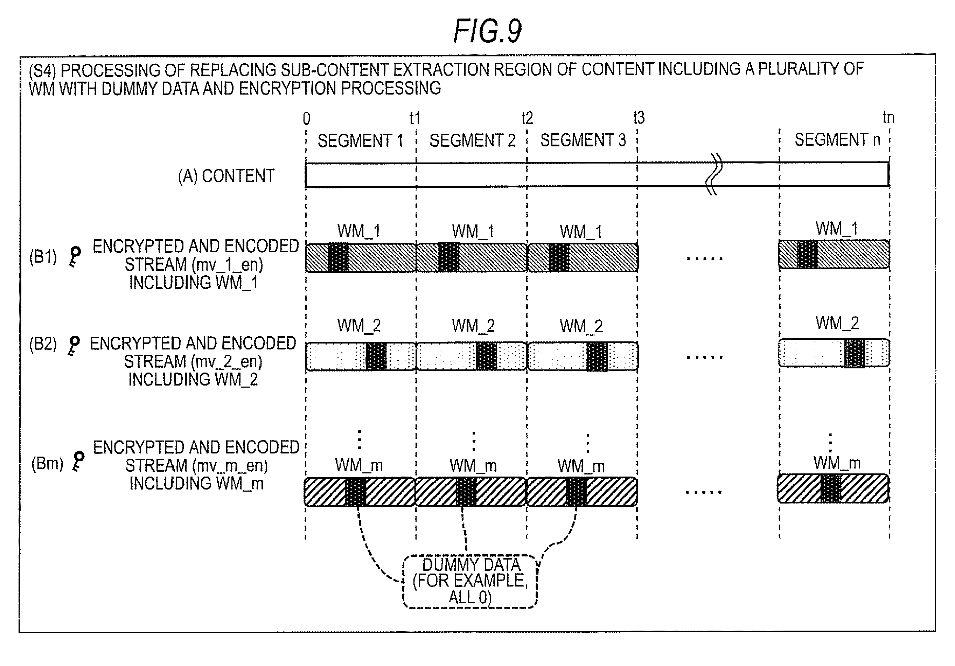

After creating the "m" partial streams (sub-content), processing (step 4 (S4)) shown in Fig. 9 is executed.

### (Step 4 (S4))

Next, processing of step 4 (S4) shown in Fig. 9 will be described.

This processing is a processing on the "m" encoded digital watermark recorded content v_1 to v_m shown in (B1) to (Bm) after extracting the partial data (sub-content) from each segment described with reference to Fig. 8.

The data at the partial data (sub-content) extraction position set in each segment of the "m" encoded digital watermark recorded content v_1 to v_m shown in (B1) to (Bm) is replaced with dummy data, for example, data of all zero. That is, the original content data in the extraction region is deleted.

The "m" encoded digital watermark recorded content (shown in (B1) to (Bm)) after replacement using dummy data is set to mv_1 to mv_m.

In addition, the server executes encryption processing on the data mv_1 to mv_m after replacement processing using dummy data by applying one encryption key (common key).

The data after this encryption is shown in (B1) to (Bm) of Fig. 9.

The "m" encoded digital watermark recorded content (shown in (B1) to (Bm)) after replacement using dummy data and encryption processing is set to mv_1_en to mv_m_en.

Fig. 9 shows the following data as data after the processing.
(B1) A stream mv_1_en with an encrypted and encoded digital watermark WM_1
(B2) A stream mv_2_en with an encrypted and encoded digital watermark WM_2
.
.
(Bm) A stream mv_m_en with an encrypted and encoded digital watermark WM_m

A black painting portion in each segment shown in Fig. 9 is a region extracted as sub-content and is also a data region replaced with dummy data (for example, all 0).

### (Steps 5 and 6 (S5 and 86))

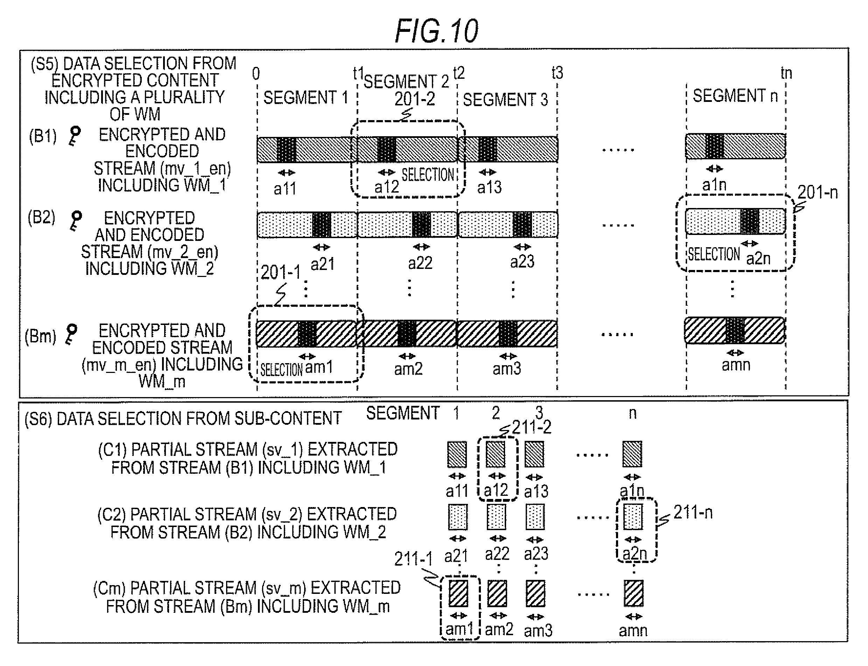

Next, processing of steps 5 and 6 (S5 and S6) shown in Fig. 10 will be described.

This processing is segment selection processing executed to create the content provided to a specific client (for example, the client A). The segment selection processing shown in steps 5 and 6 (S5 and S6) of Fig. 10 is executed in units of clients, that is, in units of content distribution processing.

Here, an example of the segment selection processing, which is executed as processing of creating the content provided to the client A as an object to whom the content is distributed, will be described.

The following two processes are included in the processing of creating the content provided to a specific client.

One of them is a processing of creating the main content by selecting the data one by one from each segment of the encrypted and encoded digital watermark recorded content mv_1_en to mv_m_en shown in (B1) to (Bm) of Fig. 10.

In addition, the other one is a processing of creating the sub-content by selecting a partial stream (sub-content) shown in (C1) to (Cm) of Fig. 10 in the same segment selection mode as in the selection processing.

In addition, the following explanation will be given using the encrypted and encoded digital watermark recorded content mv_1_en to mv_m_en, which is shown in (B1) to (Bm) of Fig. 10, as main content and using the partial stream, which is shown in (C1) to (Cm) of Fig. 10, as sub-content.

First, the server executes the following processing as processing of step 5 (S5).

As processing of creating the main content provided to a specific client (for example, the client A), processing of selecting one segment from the data shown in (B1) to (Bm) of Fig. 10 in units of segments is executed.

In the example shown in Fig. 10, main segment data 201-1 in (Bm) is selected for the segment 1, main segment data 201-2 in (B1) is selected for the segment 2, and main segment data 201-n in (B2) is selected for the segment n.

Thus, one data item is selected for each of the segments 1 to n in order to select the data of the main content provided to the client A.

Next, the server executes the following processing as processing of step 6 (S6).

As processing of creating the sub-content provided to the same client A, processing of selecting one partial data item (sub-content) from the data shown in (C1) to (Cm) of Fig. 10 in units of segments is executed.

This sub-content selection processing is assumed to be the same as the segment selection mode (segment column) in the main content shown in (B1) to (Bm).

In the example shown in Fig. 10, for the main content, main segment data 201-1 in (Bm) is selected for the segment 1, main segment data 201-2 in (B1) is selected for the segment 2, and main segment data 201-n in (B2) is selected for the segment n.

Thus, one segment data item is selected for each of the segments 1 to n.

In this case, also for the sub-content, partial data (sub-content aml) extracted from the data region of the main segment data 201-1 in (Bm) is extracted as sub-segment data 211-1 for sub-content corresponding to the segment 1.

For sub-content corresponding to the segment 2, partial data (sub-content a12) extracted from the data region of the main segment data 201-2 in (B1) is extracted as sub-segment data 211-2.

For sub-content corresponding to the segment n, partial data (sub-content a2n) extracted from the data region of the main segment data 201-n in (B2) is extracted as sub-segment data 211-n.

In this way, the main content and the sub-content provided to a client are created by matching the segment selection mode (segment column) of the main content in (B1) to (Bm) with the segment selection mode (segment column) of the sub-content in (Cl) to (Cm).

In addition, the segment column is set to change in units of content distribution, that is, in units of clients, and this segment column information is managed so as to match the content distribution client information. This management information will be described later.

### (Steps 7 and 8 (S7 and S8))

Next, processing of steps 7 and 8 (S7 and S8) shown in Fig. 11 will be described.

This processing is equivalent to final creation processing of the content provided to a certain client.

The following two processes are shown in Fig. 11.

(S7) Processing of creating the main encrypted content main_clip_en, which is provided to a client, by selecting data from the encrypted content mv_k_en including the plurality of digital watermarks WM. In addition, the main content has a segment column unique to a client.

(S8) Processing of creating the encrypted sub-content sub_clip_en, which is provided to a specific client, by encryption executed by applying an individual key for the sub-content selected in the same selection mode (segment column) of the segment unit as for the main content.

These are the two processes described above.

The processing of step 7 (S7) is a processing of completing the main encrypted content main_clip_en, which is provided to a specific client, by setting a segment column including only the segment (main segment of main content) selected by segment selection processing of the main content in step 5 (S5) described previously with reference to Fig. 10.

In addition, the processing (steps 5 to 8 (S5 to S6)) shown in Figs. 10 and 11 is sequentially executed in units of clients to whom the content is distributed or in units of content distribution processing.

The processing of step 8 (S8) is a processing of completing the encrypted sub-content sub_clip_en, which is provided to a specific client, by setting a partial stream (sub-content) including only the sub-content (sub-segment data) selected by segment selection processing of the sub-content in step 6 (S6) described previously with reference to Fig. 10 and then performing encryption processing by applying an individual key which is different in units of content distribution processing or in units of clients

As shown in Fig. 11, an encryption key of the main content shown in (S7) is a common key which is common to a plurality of clients to whom the content is distributed, but an encryption key of the sub-content shown in (S8) is a different individual key for each client to whom the content is distributed.

The main content main_clip_en shown in (S7) and a common key, which is the encryption key, and the sub-content sub_clip_en shown in (S8) and an individual key, which is the encryption key, are provided to the client.

In addition, when reproducing the content, processing of replacing a dummy data region included in the main content main_clip_en with the sub-content sub_clip_en, that is, processing of combining the main content and the sub-content is necessary.

This combining processing may be executed at the client side, or this combining processing may be executed at the server side and then the combined data may be provided to the client.

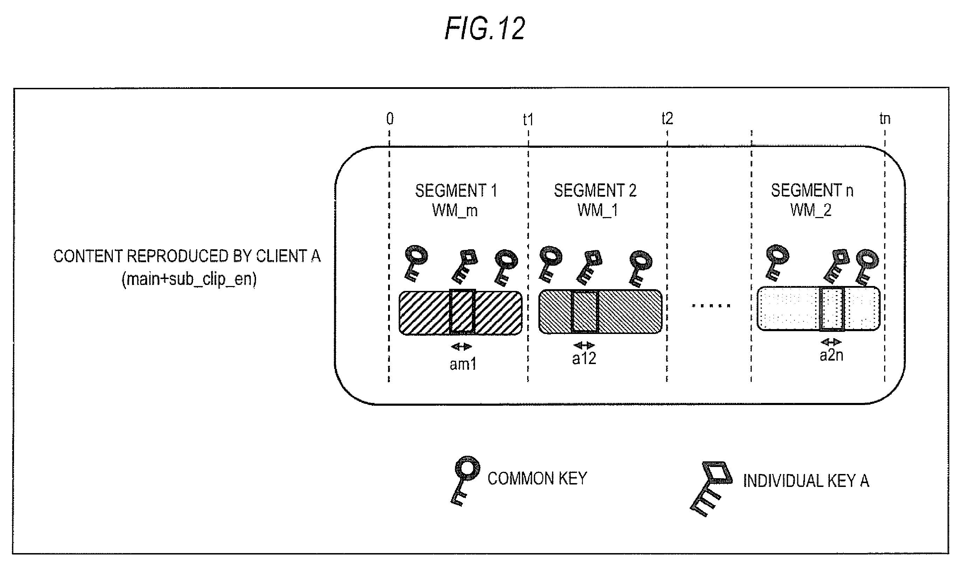

Fig. 12 shows an example of configuration of combined content main+sub_clip_en.

The content main+sub_clip_en shown in Fig. 12 is content obtained by replacing a dummy data region included in the main content main_clip_en with the sub-content sub_clip_en.

The data region of the main content main_clip_en included in the combined content main+sub_clip_en is encrypted data using a common key.

In addition, the data region of the sub-content sub_clip_en included in the combined content main+sub_clip_en, that is, the data region obtained by replacing the dummy data region of the main content main_clip_en with the sub-content sub_clip_en is a data region encrypted using a different individual key for each client.

When a client reproduces the content, it is necessary to execute the decryption processing by switching a common key and an individual key according to each region.

The server creates region information for this switching processing, that is, "extraction region information" in which data region information of a main content part encrypted by the common key and a sub-content part encrypted by the individual key is recorded and provides it to the client together with the encrypted content and the encryption key (the common key and the individual key).

The client acquires the switching position information of the encryption key (the common key and the individual key) with reference to the "extraction region information" and performs key switching to execute decryption and reproduction processing of the encrypted content. That is, the content is reproduced by executing decryption processing using the common key in the main content part and executing decryption processing by applying the individual key in the sub-content part.

Thus, the server changes a combination of segments for every content distribution and also provides a client with the content obtained by encrypting the part with a different individual key for every content Distribution.

Through this setting, for example, when a client opens an encryption key illegally, it is necessary to open two keys of the common key and the individual key to the public. In addition, the content which can be decrypted by the public key is only the content provided to the client who opens the individual key to the public.

If the content is illegally opened to the public, it becomes possible to analyze the setting of a segment column on the basis of the digital watermark information even if the open content is encrypted content or decrypted content. Since the segment column is set differently for each client, it becomes possible to specify a client who opened the content to the public illegally by analyzing the segment column.

Hereinafter, on the basis of this illegally opened content, processing of specifying a client who opens the content to the public will be described.

### [3. Processing of specifying a client, who opens the content to the public illegally, on the basis of illegally opened content]

As described above, the server changes a combination of segments (segment column) for every content distribution and also provides a client with the content obtained by encrypting the part with a different individual key for every content distribution.

A specific example of processing of specifying a client, who opened the content to the public illegally, by changing the segment column in units of distributed content will be described below.

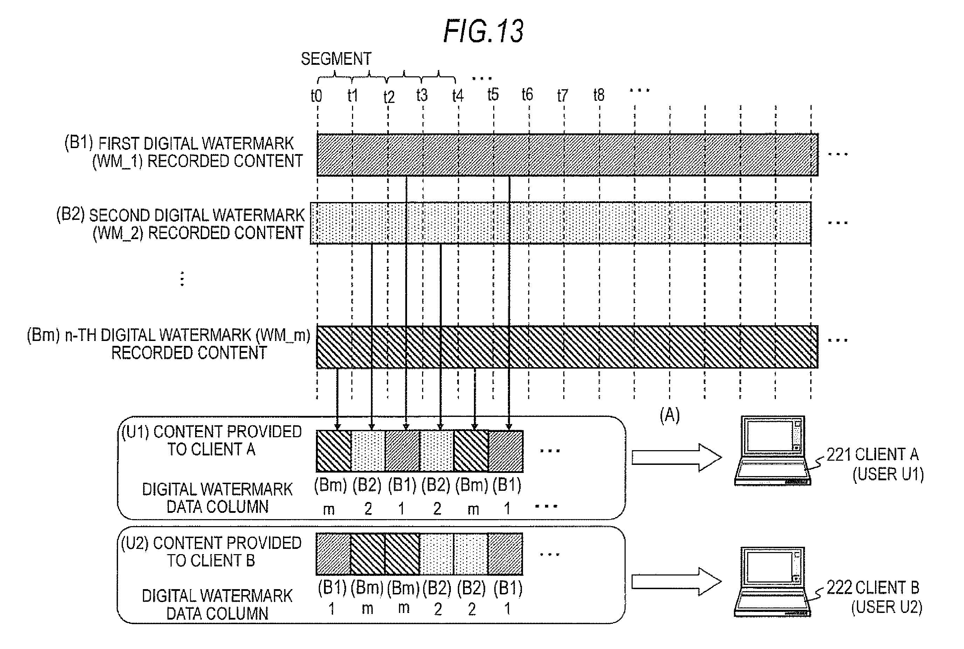

Fig. 13 shows an example of data in (B1) to (Bm), in which an identifier ID using a digital watermark is recorded in each segment, and the content with different segment columns provided to clients A and B.

Moreover, in Fig. 13, only the processing of specifying a client on the basis of the setting of different segment columns provided to each client will be described, and sub-content encrypted with an individual key is omitted.

The content in (B1) to (Bm) is content in which different digital watermark data is recorded. That is, the content in (B1) to (Bm) is content in which different digital watermark data (for example, 1 to m) is recorded for original image data for content.

Specifically, they are a plurality of digital watermark recorded content items of (B1) first digital watermark (Watermark_1) recorded content, (B2) second digital watermark (Watermark_2) recorded content, , and (Bm) m-th digital watermark (Watermark_m) recorded content.

Divided segments are set for the plurality of content items in (B1.) to (Bm). One segment includes one or more image frames.

For example, as shown in Fig. 13, reproduction time t0 to t1 is set as a first segment, reproduction time t1 to t2 is set as a second segment, and reproduction time t2 to t3 is set as a third segment, . Thus, the content shown in (A) to (Bm) is divided into segments at the same separation positions (t0, t1, t2,).

A server creates the content provided to each user by combining the content in (B1) to (Bm) divided into segments, as shown in the lower portion of Fig. 13.

In the example shown in Fig. 13, the content provided to a (U1) client A 221 is content with a configuration including (Bm) m-th digital watermark recorded content in a segment of t0 to t1 (B2) second digital watermark recorded content in a segment of t1 to t2, (B1) first digital watermark recorded content in a segment of t2 to t3, (B2) second digital watermark recorded content in a segment of t3 to t4, (Bm) m-th digital watermark recorded content in a segment of t4 to t5, (B1) first digital watermark recorded content in a segment of t5 to t6, ...

On the other hand, the content provided to a (U2) client B 222 is content with a configuration including (B1) first digital watermark recorded content in a segment of t0 to t1, (Bm) m-th digital watermark recorded content in a segment of t1 to t2, (Bm) m-th digital watermark recorded content in a segment of t2 to t3, (B2) second digital watermark recorded content in a segment of t3 to t4, (B2) second digital watermark recorded content in a segment of t4 to t5, (B1) first digital watermark recorded content in a segment of t5 to t6, .

Thus, the server creates the content, in which different segment columns are set in units of content distribution processing, and provides it to each client.

The segment arrangement of the content provided to the (U1) client A 221 is (Bm), (B2), (B1), (B2), (Bm), (B1), , and the segment-unit arrangement of digital watermark bits in this arrangement is m, 2, 1, 2, m, 1, .

On the other hand, the segment arrangement of the content provided to the (U2) client B 222 is (B1), (Bm), (Bm), (B2), (B2), (B1), ..., and the segment-unit arrangement of digital watermark bits in this arrangement is 1, m, m, 2, 2, 1, ...

Thus, by creating the content to be provided to a client (user) by connecting selected segments, it is possible to set a unique digital watermark data column in units of segments and to use this as a client identifier.

The server records and stores the digital watermark data column information (= segment column information), as the management information, so as to match the user information or a client to whom the content is to be distributed.

In addition, even if the combination of segments is different, the main data of an image (video) of the content is the same and only the digital watermark data included in the content is different. Accordingly, the reproduced content observed by all users is reproduced data of the same movie, for example.

The client A 221 receives "content provided to the (U1) client A" from the server,

The client B 222 receives "content provided to the (U2) client B" from the server.

The client stores the received content in media, such as a hard disk, and then reads it from the hard disk to reproduce it.

At the time of data reproduction, the digital watermark data is a low-level signal which is unobservable. Accordingly, it is possible to perform data reproduction without noticing that the digital watermark data is recorded at all.

Thus, the server provides each user (client) with the distribution content as content set to have different segment columns.

By arraying the m kinds of digital watermark recorded content in (B1) to (Bm) by combination in units of segments, it is possible to create the distribution content in which various different digital watermark data columns (= segment columns) are set. Each of these different digital watermark data columns is used as a client identifier or a distribution processing identifier.

The server creates and provides the distribution content having a different segment column, that is, a different digital watermark data column for every new content distribution.

The server manages the data of an digital watermark data column, which is included in the distribution content provided to a client (user), as a unique ID which is identification information corresponding to the distribution content.

This unique ID is registered and stored as management information of the server.

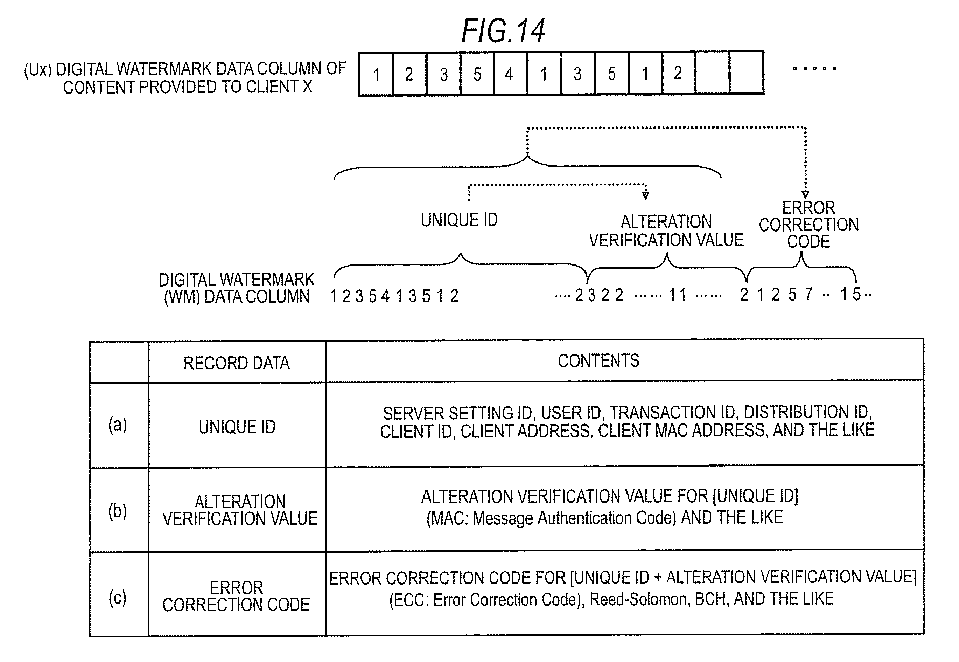

A specific example of the digital watermark data including a unique ID in units of distribution content will be described with reference to Fig. 14.

Fig. 14 shows a data column in the content provided to a client x, which is the content distributed to one client described with reference to Fig. 13. That is, Fig. 14 shows a data column of a digital watermark recorded in the content provided to the (Ux) client x.

The digital watermark data column (= segment column) is a data column of 12354135 · · · .

This digital watermark data column (= segment column) includes data of (1) unique ID set corresponding to the sub-content, (2) alteration verification value (MAC: message authentication code) corresponding to the unique ID, and (3) error correction code (ECC) corresponding to the unique ID and the alteration verification value.

In addition, the data set of (1) to (3) is repeatedly set in one distribution content.

The unique ID is an ID which enables the individual distribution content to be identified. The unique ID may be an ID created, for example, by random number generation processing in a server which distributes the content. In addition, a user ID, a transaction ID, a distribution ID, a client apparatus ID, a client address, a client MAC address, and the like may also be applied as an unique ID as shown in Fig. 14. It is preferable to set the unique ID as an ID which enables the individual distribution content to be identified. A segment column is selected corresponding to this ID, Alternatively, it is possible to select and determine a segment column randomly and use the selection result as an ID.

The alteration verification value is an alteration verification value corresponding to the unique ID. For example, a MAC (Message Authentication Code) is used as the alteration verification value.

The error correction code is an error correction code (ECC) corresponding to the unique ID and the MAC value. For example, the data, such as Reed Solomon or BCH, is used.

First, a server which distributes the content determines a unique ID corresponding to the distribution content. Then, the server calculates a MAC value corresponding to the unique ID and calculates an ECC corresponding to the unique ID and the MAC value.

The server determines an digital watermark data column which matches a data column of "unique ID/MAC/ECC" set as the result. According to the determined digital watermark data column, segments are sequentially selected from the digital watermark recorded content described above, that is, from a plurality of content items of (B1) first digital watermark (Watermark_1) recorded content, (B2) second digital watermark (Watermark_2) recorded content, ..., and (Bm) m-th digital watermark (Watermark_m) recorded content. In this way, the server creates the distribution content.

In addition, as shown in Fig, 15, a data column of "unique ID/MAC/ECC" is repeatedly set in the sub-content.

The server which distributes the content records the management information including the unique ID of the distribution content in a storage unit of the server whenever content distribution is executed.

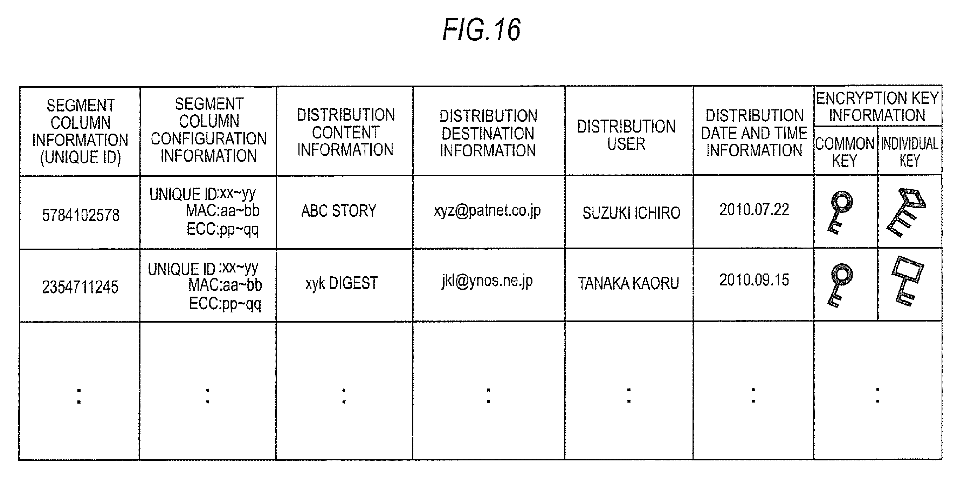

Fig. 16 shows an example of the data configuration of management information stored in a storage unit of a server.

As shown in Fig. 16, for example, segment column information as a unique ID corresponding to the distribution content, segment column configuration information, distribution content information, distribution destination information, distribution user information, distribution date and time information, and encryption key information (common key and individual key) are included in the management information.

The segment column information as a unique ID corresponding to the distribution content is equivalent to selection information of a segment provided to each client. The segment column information is arrangement information of the digital watermark data 1 to m corresponding to the selected segment. This segment column information is used as identification information of a client or distribution content.

The segment column configuration information is information indicating at which position of the content data a unique ID, a MAC, and an ECC are recorded. The segment column configuration information is information indicating which segment of the content is a unique ID recorded segment, a MAC recorded segment, or an ECC recorded segment.

In the encryption key information, information regarding an encryption key applied for encryption processing of the content to be provided is recorded.

That is, encryption key information regarding a common key applied for encryption of the main content and an individual key applied for encryption of the sub-content is recorded.

For example, key information of "common key = Kl and individual key =K001a" (encryption key information applied to the content provided to the client A) and "common key = Kl and individual key =K001b" (encryption key information applied to the content provided to the client B) is recorded as the management information so as to match the distribution destination information of the content.

For example, when a key is opened, it is possible to determine which client opened the key by analyzing the opened key and collating with the management information shown in Fig. 16.

The example of the management information shown in Fig. 16 is just an example, and all items of the information do not necessarily have to be recorded, and it is also possible to store information other than such information as the management information. The segment configuration information does not necessarily have to be set as the registration information corresponding to the distribution content either if the segment configuration information is distributed by setting the segment configuration based on the uniform data arrangement without changing it for each distribution content item,

However, the unique ID which is the identification information and the information for specifying the distribution destination should be registered so as to match each other.

### [4. Configuration and processing of a server]

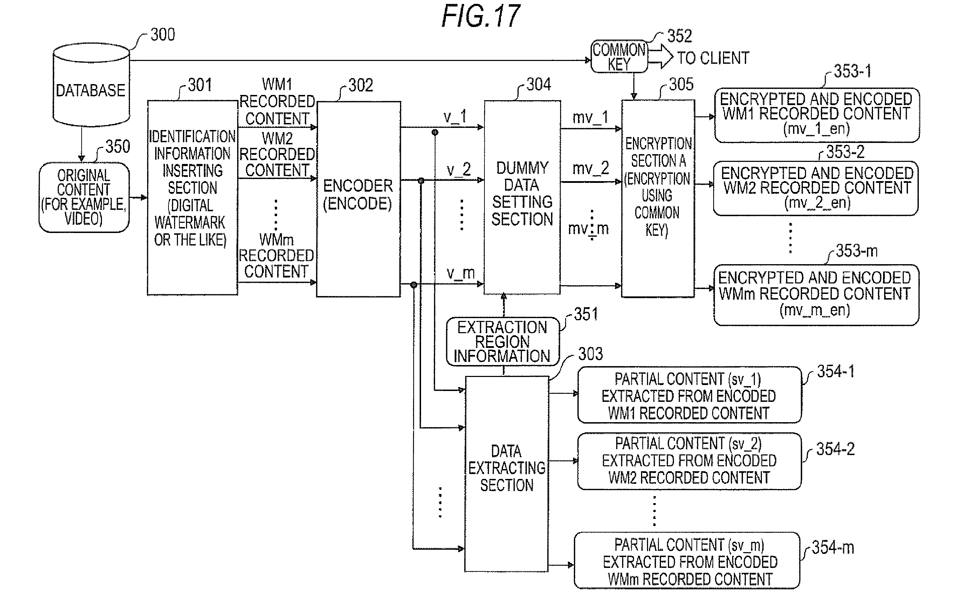

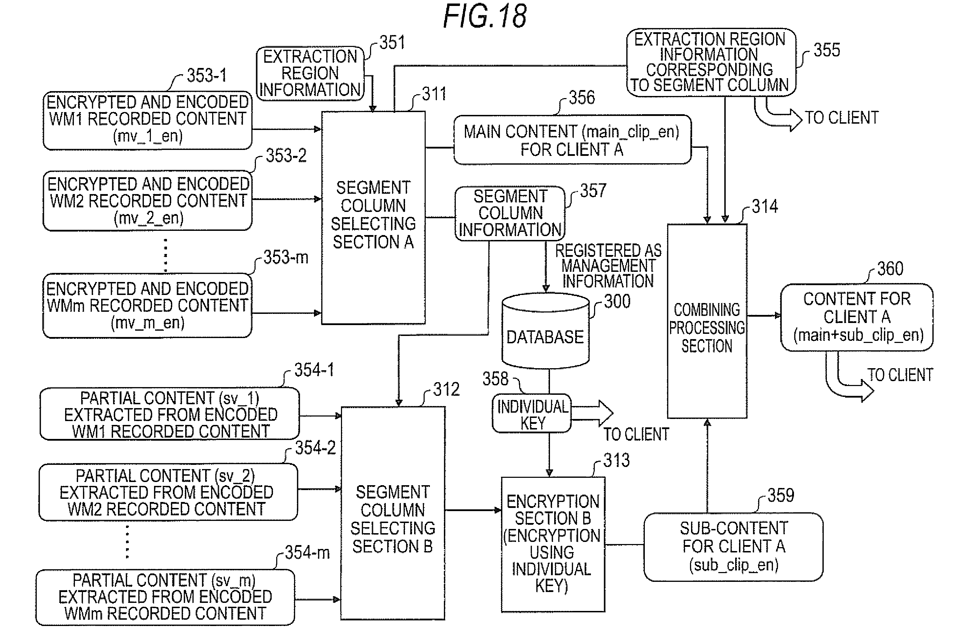

Next, the configuration and processing of a server which creates the content provided to a client will be described with reference to Figs. 17 and 18.

Figs. 17 and 18 are views showing an example of the configuration of a data processor which executes content creation processing in a server. Fig. 17 shows the first half of processing of creating the content provided to a client, and Fig. 18 shows the second half.

Processing in the first half of the processing of creating the content provided to a client will be described with reference to Fig. 17.

An original content 350 is content, such as a movie, for example, and is data including an image (video). For example, the original content 350 is extracted from a database 300.

An identification information inserting section 301 performs processing of recording the identification information, which can be used as information for identifying a client of a content distribution destination, for the original content 350.

Specifically, as described previously with reference to Figs. 5 to 15, the identification information inserting section 301 creates "m" digital watermark recorded content (content recorded with WM_1 in (B1) to content recorded with NM_m in (Bm)) in which predetermined digital watermark information (for example, the data I to m) is recorded in units of segments.

The "m" digital watermark recorded content (content recorded with WM_1 in (B1) to content recorded with WM_m in (Bm)) in which the identification information is recorded is subjected to encoding processing, such as MPEG compression, by an encoder 302.

The encoded "m" data items v_1 to v_m in which digital watermarks are recorded are provided to a data extracting section 303 and a dummy data setting section 304.

In addition, the "m" data items v_1 to v_m, which are encoded data in which digital watermarks are recorded and which are output from the identification information inserting section 301, are equivalent to "m" data items in (B1) to (Bm) described previously with reference to Fig. 7.

The data extracting section 303 extracts some of the data of the segments of the "m" different encoded digital watermark recorded content items v_1 to v_m. This processing is equivalent to the processing described previously with reference to Fig. 8. As described with reference to Fig. 8, partial data (sub-content) is extracted from each segment of the "m" different encoded digital watermark recorded content items v_1 to v_m.

First, as shown in Fig. 8 (S2), a sub-content region extracted from each segment of the content including the plurality of digital watermark WM is determined, and a sub-content extraction result is obtained as shown in Fig. 8 (S3) . As shown in Fig. 8 (S3), the sub-content including (C1) partial stream sv_1 extracted from the stream (B1) including a digital watermark WM_1, (C2) partial stream sv_2 extracted from the stream (B2) including a digital watermark WM_2, (Cm) partial stream sv_m extracted from the stream (Bm) including a digital watermark NM_m is created.

In addition, although the position of a sub-content region extracted from each segment of the content v_1 to v_m including the plurality of digital watermarks WM is arbitrary as described above, it is preferable to select a scene of video content attractive to a user and to extract it in the GOP unit as a unit of encoding processing, for example.

As shown in Fig. 17, the output as a processing result of the data extracting section 303 is data of partial content so_1 353-1 extracted from the encoded content recorded with WM1, partial content sv_2 353-2 extracted from the encoded content recorded with WM2, .., and partial content sv_m 353-m extracted from the encoded content recorded with WMm.

In addition, the data extracting section 303 outputs the position information of the sub-content region extracted from each segment of the content v_1 to v_m including the plurality of digital watermarks WM, as extraction region information 351, to the dummy data setting section 304.

In addition, this extraction region information 351 is also provided to a segment column selecting section 311 shown in Fig. 18.

The "m" data items v_1 to v_m, which are encoded data in which digital watermarks are recorded and which are output from the identification information inserting section 301, and the extraction region information 351, which is the position information regarding the region where the sub-content is extracted from the data extracting section 303, are input to the dummy data setting section 304.

The dummy data setting section 304 executes processing of replacing the sub-content extraction region, which is set in each segment of the "m" data items v_1 to v_m, with dummy data (for example, all 0).

This processing is equivalent to the processing in the first half of the processing (S4) described previously with reference to Fig. 9. As described with reference to Fig. 9, "m" streams mv_1 to mv_m are created by replacing the partial data (suta-cantent) extraction region, which is set in each segment of the "m" different encoded digital watermark recorded content items v_1 to v_m, with dummy data (for example, all 0).

The "m" streams mv_1 to mv__m created by the dummy data setting section 304 are input to an encryption section A 305. The encryption section A encrypts the "m" streams mv_1 to mv_m by applying an encryption key (common key) common to clients"

This processing is equivalent to the processing in the second half of the processing (S4) described previously with reference to Fig. 9. As described with reference to Fig. 9, "m" encrypted/encoded digital watermark recorded content mv_1_en to mv_m_en 352-1 to 352-m is created by applying the encryption key (common key), which is common to clients, to the "m" streams mv_1 to mv_m in which the sub-content extraction region of each segment of the "m" different encoded digital watermark recorded content items v_1 to v_m is replaced with dummy data (for example, all 0).

Next, the second half of the processing of creating the content, which is provided to a client, in a server will be described with reference to Fig. 18.

The "m" encrypted/encoded digital watermark recorded content mv_1_en to mv_m_en 352-1 to 352-m created by the encryption section A 305 is input to a segment column selecting section A 311.

The segment column selecting section A 311 determines a segment column of the main content. That is, by determining a different segment column for each content distribution client, the main content including unique segment columns provided to a client by selecting the data one by one from each segment of the "m" encrypted/encoded digital watermark recorded content mv_1_en to mv_m_en 352-1 to 352-m is created.

This processing is equivalent to the processing (S5) described previously with reference to Fig. 10. As described with reference to Fig. 10, the main content provided to a specific client is created by selecting the data one by one from each segment of the encrypted and encoded digital watermark recorded content mv_1_en to mv_m_en shown in (B1) to (Bm) of Fig. 10.

In the example shown in Fig. 10 (S5), the main segment data 201-1 in (Bm) is selected for the segment 1, the main segment data 201-2 in (B1) is selected for the segment 2, and the main segment data 201-n in (B2) is selected for the segment n , Thus, one data item is selected for each of the segments 1 to n in order to create the main content provided to a specific client (for example, the client A).

In addition, segment column information 357 determined at this time is registered in the management information (refer to Fig. 16) stored in the server.

In addition, the extraction region information included in a segment column unique to a client determined by a segment column selecting section A 351 (extraction region information corresponding to a segment column 355) is provided to the client at the distribution destination of the content including the segment column together with the content. The client can execute decryption and reproduction by applying a correct key corresponding to each data region using the extraction region information as key switching position information of a common key and an individual key.

Data of the partial content sv_1 353-1 extracted from the encoded content recorded with WM1, the partial content sv_2 353-2 extracted from the encoded content recorded with WM2, ..., and the partial content sv_m 353-m extracted from the encoded content recorded with WMm is input from the data extracting section 303 to a segment column selecting section B 312 shown in Fig. 18.

In addition, the segment column information 357 from the segment column selecting section A is input to the segment column selecting section B 312,

The segment column selecting section B 312 determines a segment column of sub-content with the same setting as for the segment column of the main content according to the segment column information 357 from the segment column selecting section A, and creates the sub-content for a specific client.

This processing is equivalent to the processing (S6) described previously with reference to Fig. 10. As described with reference to Fig. 10, processing of selecting one partial data item (sub-content) from the data shown in (C1) to (Cm) of Fig. lt3 in units of segments is executed.

At the time of sub-content selection processing, the segment column selecting section B 312 performs selection processing of sub-content, which is set in the same segment column as in the segment selection mode (segment column) in the main content (B1) to (Bm), with reference to the segment column information 357 input from the segment column selecting section A.

Then, the segment column selecting section B 312 inputs to an encryption section B 313 the segment selection result of sub-content for a specific client.

The encryption section B 313 executes encryption processing on the sub-content for a specific client (for example, the client A) by applying an encryption key (individual key 358) unique to the client.

This processing is equivalent to the processing described previously with reference to Fig. 11 (S8) . This is encryption processing of a partial stream (sub-content) including only the sub-content (sub-segment data) selected by the segment selection processing on the sub-content. The encrypted sub-content sub_clip_en provided to a specific client is completed by performing encryption processing by applying different individual keys in units of content distribution processing or in units of clients.

As described previously with reference to Fig. 11 (S7 and S8), the encryption key of the main content shown in (S7) is a common key which is common to a plurality of clients to whom the content is distributed, and the encryption key of the sub-content shown in (S8) is an individual key which is different for each client to whom the content is distributed.

Data of main content main_clip_en 356 encrypted with the common key for a specific client created by the segment column selecting section A 311, sub-content sub_clip_en 359 encrypted with the individual key for a specific client created by the segment column selecting section B 312, and extraction region information corresponding to a segment column 355 which is extraction region information corresponding to a segment selected by the segment column selecting section A 311 is input to a combining processing section 314 shown in Fig. 18.

The combining processing section 314 executes processing of setting the sub-content in a dummy data region of the main content 356 on the basis of the extraction region information corresponding to a segment column 355.

Also by this processing, the content provided to a client described previously with reference to Fig. 12 is created.

The content main+sub_clip_en 360 for the client A as the creation result corresponds to the content shown in Fig. 12, and is provided to a client.

Data of the content main+sub_clip_en 360 as a combining result of the main encrypted content main_clip_en and the sub-content sub_clip_en, the common key which is an encryption key of the main encrypted content main_clip_en, the individual key which is an encryption key of the encrypted sub-content sub_clip_en, and the region information corresponding to a segment column which is the region information of the main encrypted content main_clip_en and the encrypted sub-content sub_clip_en are provided to the client.

In the explanation made with reference to Figs. 17 and 18, a processing example has been described in which the content main+sub_clip_en 360 is created by combining processing of the main encrypted content main_clip_en and the sub-content sub_clip_en in the combining processing section 314 and is then provided to the client.

However, this combining processing may be executed at the client side. In this case, the server provides the main encrypted content main_clip_en and the sub-content sub_clip_en, which are data before combining, individually to the client. On the basis of this data, the client executes the same combining processing as the combining processing section 314, to create the content main+sub_clip_en for reproduction.

### [5. Content distribution processing using CDN]

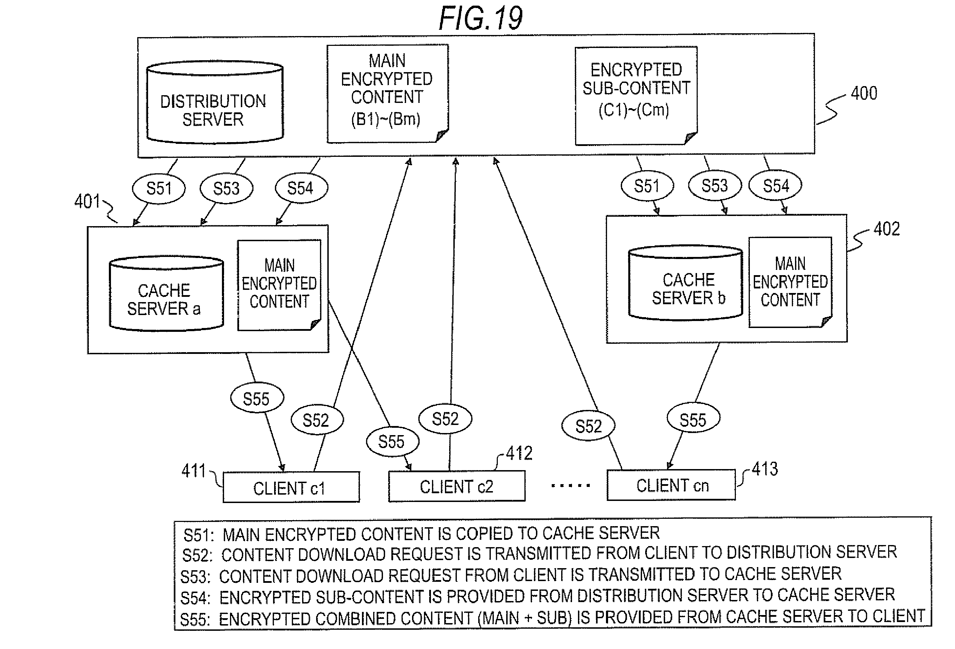

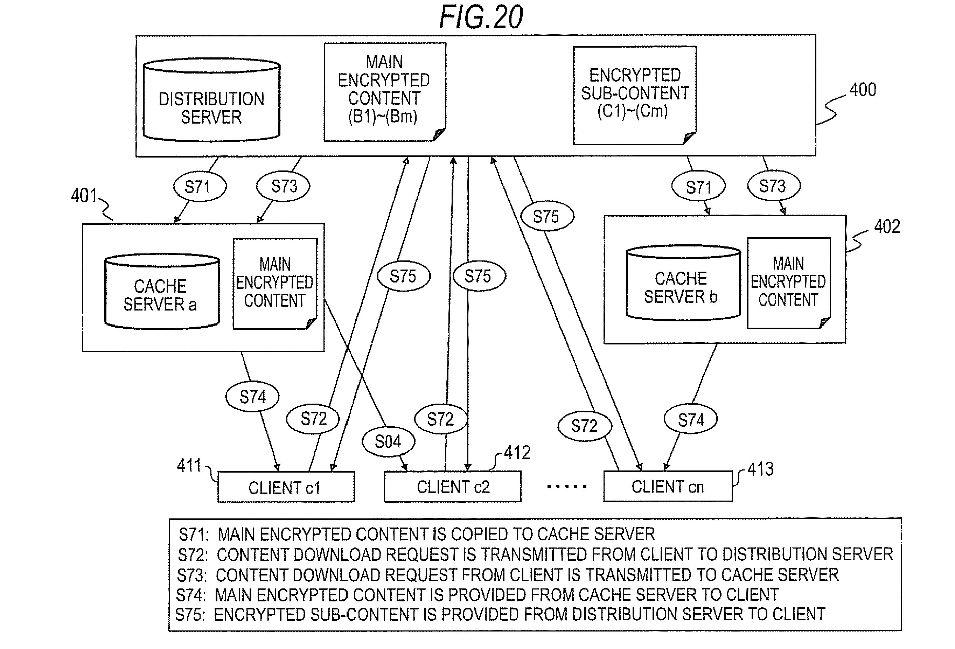

As an example of processing of distributing the content to a client, an example of content distribution processing by a CDN (Contents Distribution Network) using a plurality of cache servers will be described with reference to Figs. 19 and 20.

Fig. 19 shows a distribution server 400, cache servers a and b 401 and 402, and clients c1 to cn 411 to 413.

The distribution server 400 is a server of a content distribution source which performs content creation processing described with reference to Figs. 17 and 18.

For example, the cache servers a and b 401 and 402 are cache servers corresponding to specific areas. Specifically, the cache servers a and b 401 and 402 are cache servers corresponding to clients in specific areas set in the area unit, such as the Europe area, the North America area, and the Asia area. In addition, the cache servers a and b 401 and 402 may be cache servers set according to the kind of content.

Although two cache servers are shown in Fig. 19, the number of cache servers is arbitrary, and a larger number of cache servers may also be provided.

In the configuration shown in Fig. 19, processing of providing the content to the clients cl to cn 411 to 413 is performed according to the sequence of steps S51 to S55 shown in the drawing.

First, in step S51, the distribution server 400 provides each cache server with a common key and copy data of the "m" digital watermark recorded content of (B1) to (Bm) subjected to digital watermark recording, dummy data replacement, and encryption processing using a common key and stores them in the cache server. This data is equivalent to the data of (B1) to (Bm) described with reference to Fig. 9.

That is, a common key and copy data of (81) stream mv_1_en with an encrypted and encoded digital watermark WM_1, (B2) stream mv_2_en with an encrypted and encoded digital watermark WM_2, ..., and (Bm) stream mv_m_en with an encrypted and encoded digital watermark WM m are provided to each of the cache servers 401 and 402.

Then, in step S52, the clients c1 to cn 411 to 413 transmit requests for distribution (download) of the content to the distribution server 400.

Then, in step S53, the distribution server 400 transmits the content distribution requests from the clients to cache servers corresponding to the clients,

For example, the distribution server 400 performs processing of transmitting a content distribution request from a client in Europe to the cache server corresponding to the Europe area and transmitting a content distribution request from a client in Japan to the cache server corresponding to the Japan or Asia area.

In addition, when transmitting the content distribution requests, the distribution server 400 determines a unique segment column corresponding to a client and provides the cache server with the determined segment column information. The distribution server 400 records the determined segment column information as management information so as to match the client information.

Then, in step S54, the distribution server 400 creates the sub-content sub_clip_en selected according to the unique segment column corresponding to a client and provides the cache server with the created sub-content sub_clip_en, the unique key, and the extraction region information corresponding to the segment column.

Then, in step S55, the cache server which has received the segment column information and the sub-content sub_clip_en from the distribution server 400 creates the main content main_clip_en corresponding to a client by selecting segments of the main content, according to the segment column information, from the copy data of the "m" digital watermark recorded content of (81) to (Bm) received from the distribution server 400 in advance.

In addition, the content main+ sub_cl ip_en provided to the client is created by processing of combining the main content main_clip_en and the sub-content sub_clip_en and is then provided to the client.

In addition, the common key, the individual key, and the extraction region information corresponding to a segment column are provided together to the client.

This processing example is an example of combining processing executed in a cache server.

Next, another method of content distribution processing using the CDN will be described with reference to Fig. 20.

Similar to Fig. 19, Fig. 20 also shows a distribution server 400, cache servers a and b 401 and 402, and clients cl to cn 411 to 413.

In the configuration shown in Fig. 20, processing of providing the content to the clients cl to cn 411 to 413 is performed according to the sequence of steps S71 to S75 shown in the drawing.

First, in step S71, the distribution server 400 provides each cache server with a common key and copy data of the "m" digital watermark recorded content of (B1) to (Bm) subjected to digital watermark recording, dummy data replacement, and encryption processing using a common key and stores them in the cache server. This data is equivalent to the data of (B1) to (Bm) described with reference to Fig. 9.

That is, a common key and copy data of (B1) stream mv_1_en with an encrypted and encoded digital watermark WM_1, (B2) stream mv_2_en with an encrypted and encoded digital watermark WM_2, , and (Bm) stream mv_m_en with an encrypted and encoded digital watermark WM_m are provided to each of the cache servers 401 and 402.

Then, in step S72, the clients c1 to cn 411 to 413 transmit requests for distribution (download) of the content to the distribution server 400.

Then, in step S73, the distribution server 400 transmits the content distribution requests from the clients to cache servers corresponding to the client,

In addition, when transmitting the content distribution requests, the distribution server 400 determines a unique segment column corresponding to a client and provides the cache server with the determined segment column information. The distribution server 400 records the determined segment column information as management information so as to match the client information.

Then, in step S74, the cache server which has received the segment column information from the distribution server 400 creates the main content main_clip_en corresponding to a client by selecting segments of the main content, according to the segment column information, from the copy data of the "m" digital watermark recorded content in (B1) to (Bm) received from the distribution server 400 in advance and provides the main content main_clip_en to the client together with the common key.

Then, in step S75, the distribution server 400 creates the sub-content sub_clip_en selected according to the unique segment column corresponding to a client and provides the client with the created sub-content sub_clip_en, the unique key, and the extraction region information corresponding to the segment column.

In this processing example, a client receives the main content main_clip_en and the sub-content sub__clip_en separately, and this client executes combining processing.

In addition, instead of the content distribution processing example described with reference to Figs. 19 and 20, various kinds of setting may also be applied.

In content distribution using the CDN, it is possible to disperse the load in data transmission by using many cache servers. As a result, it is possible to prevent distribution delay and the like caused by an increase in the processing load in one specific server.

### [6. Content reproduction processing in a client]

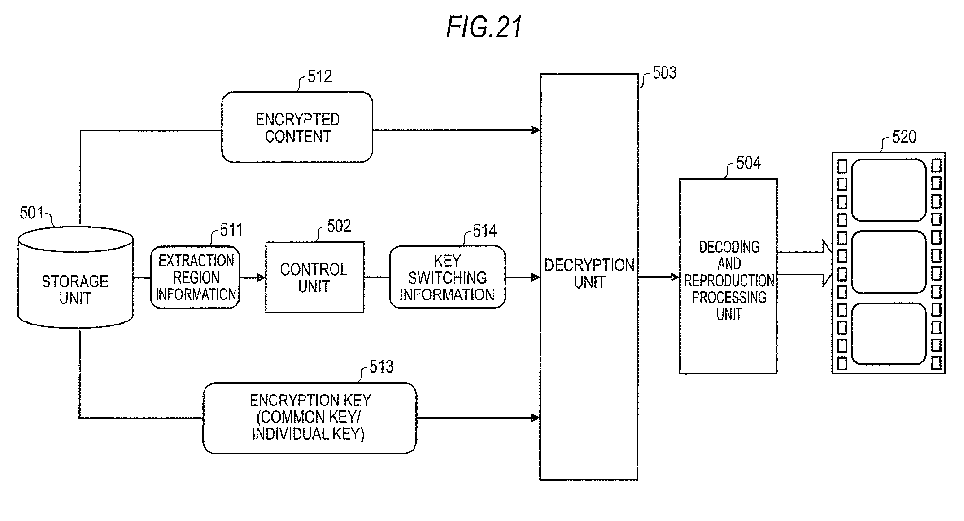

Next, an example of content reproduction processing in a client will be described with reference to Fig. 21. Fig. 21 shows the configuration of a data processor, which executes content reproduction processing in a client, and a storage unit.

A client receives data of the encrypted content main+sub_clip_en, a common key, an individual key, and region information corresponding to a segment column from a server and stores them in a storage unit 501.

First, a control unit 502 of the data processor of the client acquires extraction region information (extraction region information corresponding to a segment column) 511 from the storage unit. This is the information indicating the encrypted data configuration of each segment included in a segment column provided to the client. That is, the extraction region information 511 is information by which a main content region encrypted with a common key and a sub-content region encrypted with an individual key can be checked.

As shown in Fig. 21, the control unit 502 of the client reads the extraction region information 511 from the storage unit 501 and outputs key switching information 514 to a decryption unit 503 with reference to the extraction region information 511.

That is, the control unit 502 of the client outputs a common key application command to the decryption unit 503 for the data region encrypted with the common key, and outputs an individual key application command to the decryption unit 503 for the data region encrypted with the individual key.

The decryption unit 503 executes decryption processing on the encrypted content main+sub_clip_en 512 read from the storage unit 501 by appropriately executing key switching by applying an encryption key (common key and individual key) 513 read from the storage unit 501.

The decryption result is provided to a decoding and reproduction processing unit 504. The decoding and reproduction processing unit 504 executes predetermined decoding processing, for example, MPEG decoding to execute reproduction processing and output reproduced data 520.

### [7. Content creation and providing processing sequence in a server]

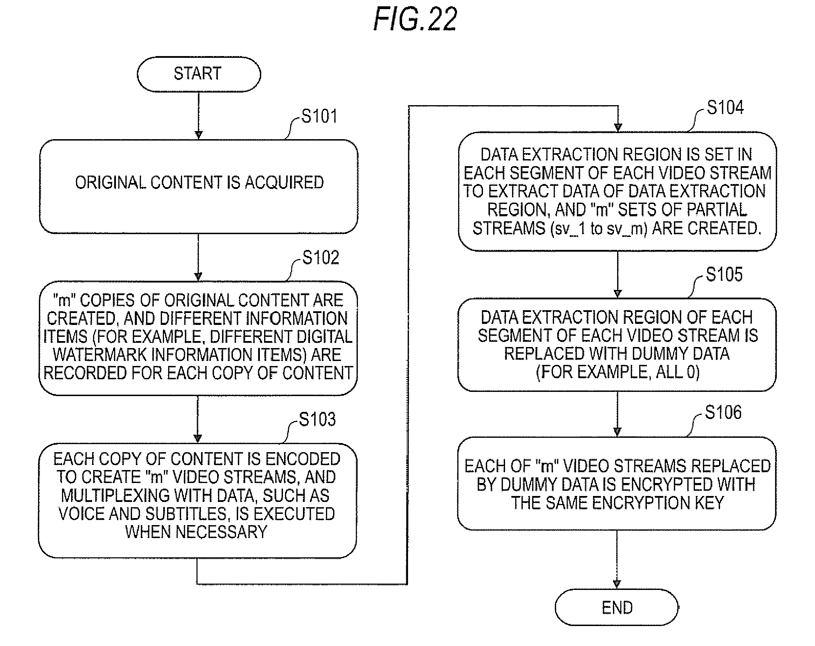

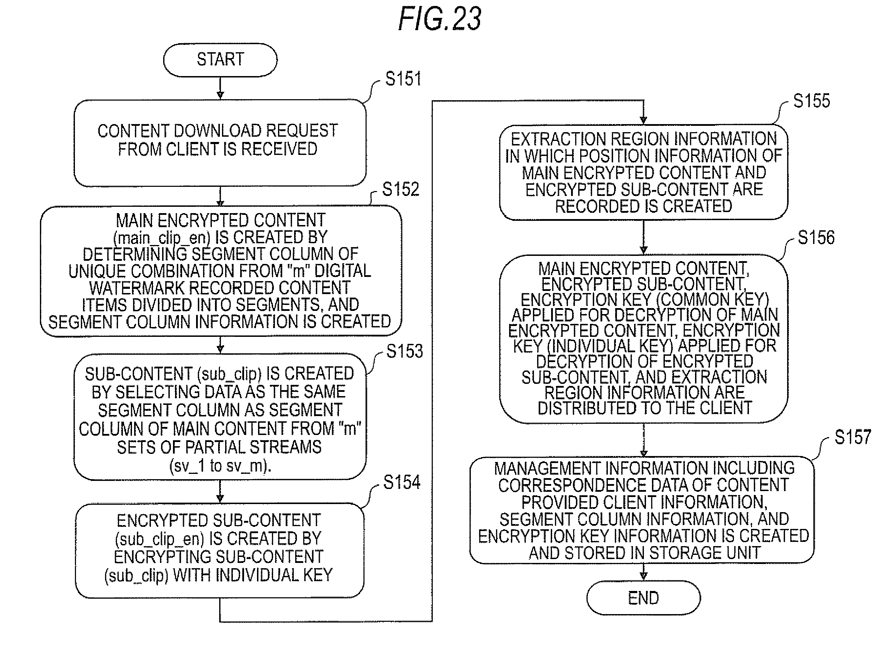

Next, the content creation and providing processing sequence which is executed in a server of a service provider or the like with reference to flow charts shown in Figs. 22 and 23 will be described.

### (7-1. Content creation processing sequence in a server)

First, the content creation processing sequence which is executed in a server of a service provider or the like will be described with reference to the flow chart shown in Fig. 22.

The processing according to the flow shown in Fig. 22 is executed by the data processor of the server.

First, in step S101, the data processor acquires the original content, such as a movie,

Then, in step S102, the data processor creates "m" copies of the original content and records different information items (for example, different digital watermark information items) for each copy of the content,

Then, in step S103, the data processor encodes each copy of the content to create "m" video streams. In addition, multiplexing with data, such as a voice and subtitles, may be executed when necessary.

This processing is equivalent to the processing described previously with reference to Fig. 7.

That is, as described with reference to Fig. 7, predetermined encoding processing (for example, MPEG compression) is executed after digital watermark recording processing.

As a result, the encoded digital watermark recorded content v_1 to v_m, in which "m" different digital watermarks shown in Fig. 7 are recorded, is created. That is, "m" different encoded digital watermark recorded content items v_1 to v_m are created including (B1) v_1: first digital watermark Watermark_1 recorded content in which the digital watermark data 1 is recorded in each segment, (B2) v_2: second digital watermark Watermark_2 recorded content in which the digital watermark data 2 is recorded in each segment, , and (Bm) v_m: m-th digital watermark Watermark_m recorded content in which the digital watermark data m is recorded in each segment.

Then, in step S104, the data processor sets a data extraction region in each segment of each video stream to extract the data of the data extraction region and creates "m" sets of partial streams sv_1 to sv_m.

This processing is equivalent to the processing described previously with reference to Fig. 8.

That is, as described with reference to Fig. 8, this is a processing of extracting partial data (sub-content) from each segment of the "m" different encoded digital watermark recorded content items v_1 to v_m.

First, as shown in Fig. 8 (S2), the server determines a sub-content region extracted from each segment of the content v_1 to v_m including the plurality of digital watermarks WM.

The server extracts a predetermined portion from each segment in each video stream. Although the extraction position is arbitrary, it is preferable to select a scene of video content attractive to a user and to extract it in the GOP unit as a unit of encoding processing, for example.

As the extracted content (partial stream) which is extracted in the segment unit of the "m" different digital watermark recorded content items v_1 to v_m, "m" partial streams (sub-content) corresponding to the content v_1 to v_m including the plurality of digital watermarks WM are created, as shown in Fig. 8 (S3).

They are the respective data items shown in (C1) to (Cm) of Fig. 8.

Then, in step S105, the data processor executes processing of replacing the data extraction region of each segment of each video stream with dummy data (for example, all 0).

This processing is equivalent to the processing described previously with reference to Fig. 9.

That is, as described with reference to Fig. 9, the data processor replaces the data at the partial data (sub-content) extraction position, which is set in each segment of the "m" encoded digital watermark recorded content v_1 to v_m shown in (B1) to (Bm), with dummy data, for example, data of all zero. That is, the original content data in the extraction region is deleted.

Then, in step S106, the data processor encrypts the "m" video streams replaced by dummy data with the same encryption key.

This processing also corresponds to the processing described with reference to Fig. 9.

The server executes encryption processing on the data mv_1 to mv_m after replacement processing using dummy data by applying one encryption key (common key).

The data after this encryption is shown in (B1) to (Bm) of Fig. 9.

Thus, the "m" encoded digital watermark recorded content items (shown in (B1) to (Bm)) mv_1_en to mv_m_en after replacement using dummy data and encryption processing are created.

### (7-2. Content providing processing sequence in a server)

Next, the content providing processing sequence which is executed in a server of a service provider or the like will be described with reference to the flow chart shown in Fig. 23.

The processing according to the flow shown in Fig. 23 is sequentially executed by the data processor of the server whenever processing of distributing the content to a client is executed.

First, in step S151, the data processor receives a content download request from a clients,

Then, in step S152, the data processor creates the main encrypted content main_clip_en by determining a segment column of a unique combination from "m" digital watermark recorded content items divided into segments. In addition, the segment column information is created.

This processing is equivalent to the processing described previously with reference to Fig. 10 (S5).

This is a processing of creating the main content by selecting the data one by one from each segment of the encrypted and encoded digital watermark recorded content mv_1_en to mv_m_en shown in (B1) to (Bm) of Fig. 10.

The segment column is assumed to be a segment column unique to a client.

Then, in step S153, the data processor creates sub-content sub_clip by selecting the data as the same segment column as the segment column of the main content from the "m" sets of partial streams sv_1 to sv_m,

This processing is equivalent to the processing described previously with reference to Fig. 10 (S6).

This is a processing of selecting one partial data item (sub-content) from the data shown in (C1) to (Cm) of Fig. 10 in units of segments. This sub-content selection processing is assumed to be the same as the segment selection mode (segment column) in the main content shown in (B1) to (Bm).

Then, in step S154, the data processor creates the encrypted sub-content sub_clip_en by encrypting the sub-content sub_clip with an individual key.

This processing is equivalent to the processing described previously with reference to Fig. 11 (S8),

This is a processing of creating the encrypted sub-content sub_clip_en, which is provided to a specific client, by encryption executed by applying an individual key for the sub-content selected in the same selection mode (segment column) of the segment unit as for the main content.

Then, in step S155, the data processor creates the extraction region information in which the position information of the main encrypted content and the encrypted sub-content are recorded.

This is the extraction region information of only a segment included in a segment column corresponding to a client, and is the extraction region information corresponding to a segment column 355 shown in Fig. 18.

As described previously with reference to Fig. 18, the segment column selecting section A 351 creates the extraction region information (extraction region information corresponding to a segment column 355) included in a segment column unique to a client. This extraction region information is provided to a client of the distribution destination of the content including the segment column together with the content. The client can execute decryption and reproduction by applying a correct key corresponding to each data region using the extraction region information as key switching position information of a common key and an individual key.

Then, in step S156, the server distributes to the client the main encrypted content main_clip_en, the encrypted sub-content sub_clip_en, the encryption key (common key) applied for decryption of the main encrypted content, the encryption key (individual key) applied for decryption of the encrypted sub-content, and the extraction region information.

In addition, this flow is an example of processing when processing of combining the main encrypted content main_clip_en and the encrypted sub-content sub_clip_en is not executed in a server.

In the case of executing the combining processing, as described previously with reference to Fig. 18, the content main+sub_clip_en as a combining result is created by processing of combining the main content main_clip_en and the sub-content sub_clip_en and is then provided to the client.

Then, in step S157, the data processor creates the management information including the correspondence data of the content provided client information, the segment column information, and the encryption key information and stores the management information in a storage unit"

For example, the management information in step S157 is the management information described with reference to Fig. 16.

This is the management information in which a unique ID as the client identification information and the client information, such as the distribution destination information or the distribution user information, are recorded in units of content provided to each client so as to match each other"

### [8. Content reproduction sequence in a client]

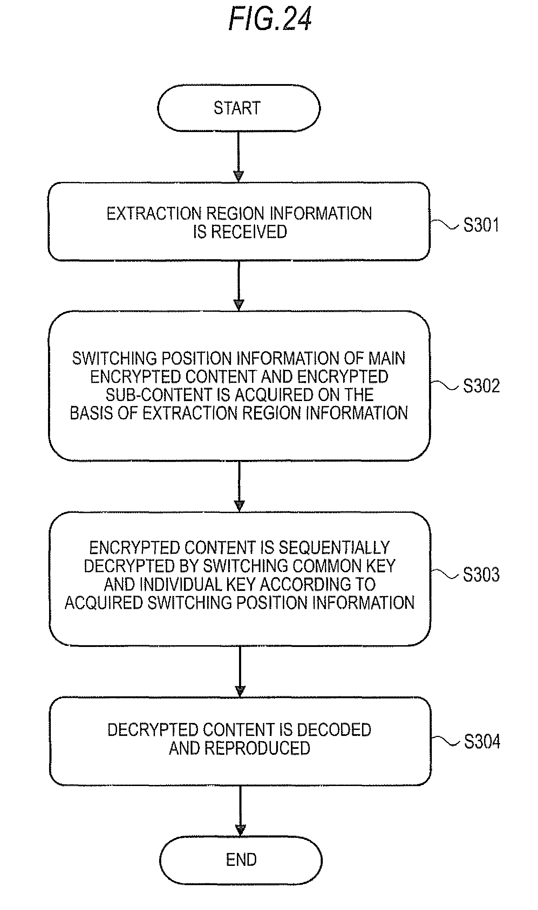

Next, the content reproduction processing sequence in a client will be described with reference to the flow chart shown in Fig. 24. This processing is executed as processing of a data processor which executes reproduction processing in a client apparatus.

First, in step S301, the client apparatus which executes content reproduction processing acquires the extraction region information received from the server.

As described previously with reference to Fig. 21, the extraction region information (= extraction region information corresponding to a segment column) is information indicating the encrypted data configuration of each segment included in a segment column provided to the client, That is, the extraction region information (= extraction region information corresponding to a segment column) is information by which a main content region encrypted with a common key and a sub-content region encrypted with an individual key can be checked.

Then, in step S302, the data processor in the client apparatus acquires the switching position information of the main encrypted content and the encrypted sub-content on the basis of extraction region information.

Then, in step S303, the data processor decrypts the encrypted content sequentially by switching the common key and the individual key according to the acquired switching position information.

That is, the data processor executes decryption processing, in which the common key is applied, for the data region encrypted with the common key and executes decryption processing, in which the individual key is applied, for the data region encrypted with the individual key.

Then, in step S304, the data processor performs reproduction processing by decoding the decrypted content, for example, by executing MPEG decoding processing on the decrypted content.

### [9. Source determination processing sequence based on illegally distributed content in a server]

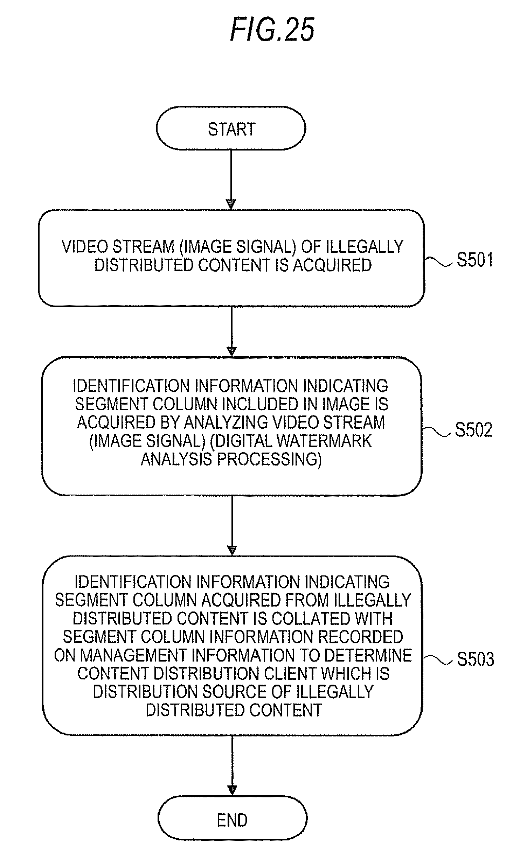

Next, the source determination processing sequence executed when the illegally distributed content is found will be described with reference to the flow chart shown in Fig. 25.

The processing according to the flow shown in Fig. 25 is processing executed by a data processor of a server of a service provider which executes content distribution, for example.

First, in step S501, the data processor acquires an image signal of the illegally distributed content.

For example, the illegally distributed content is content which is set such that any one on a network can freely download it from an accessible site or a copy of the content recorded on a disk illegally distributed.

Then, in step S502, the data processor acquires the identification information (unique ID) indicating a segment column included in an image by analyzing a video stream (image signal) of the illegally distributed content" That is, the data processor executes digital watermark analysis processing.

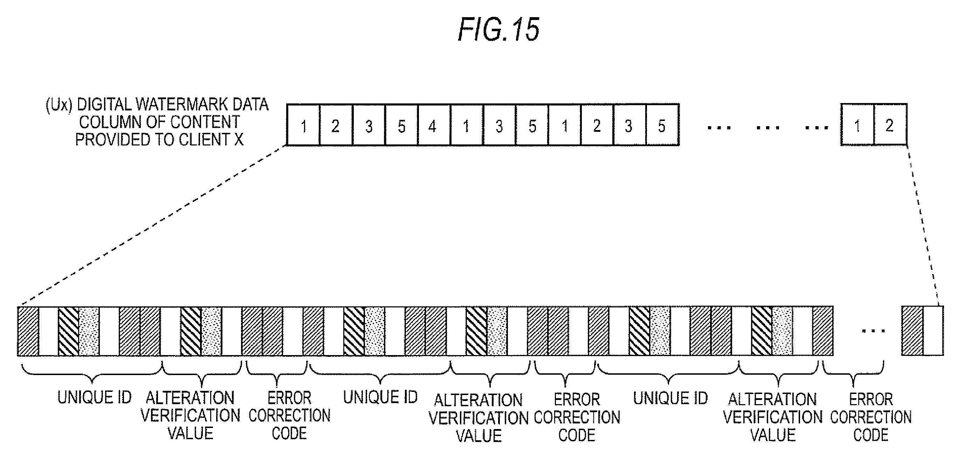

Moreover, in the digital watermark analysis processing, as described previously with reference to Figs. 14 and 15, when an error correction code, an alteration verification value, and the like are recorded, the data processor reads the identification information which is a unique ID after executing error correction processing or alteration verification processing using these data items.

Then, in step S503, the data processor collates the identification information acquired from the illegally distributed content with the identification information (unique ID) recorded on the management information to determine a distribution source of the illegally distributed content, that is, a client who distributed the content.

In addition, the management information is management information shown in Fig. 16 described previously,

In the flow shown in Fig. 25, only the example of processing of analyzing the digital watermark data has been described. However, when an encryption key corresponding to the sub-content provided to a client is an individual key unique to the client and the individual key is illegally distributed, it is possible to clarify the source of the illegally distributed key by collating the illegally distributed individual key with the registration information of the management information shown in Fig. 16.

### [10. An example of the hardware configuration of each apparatus]

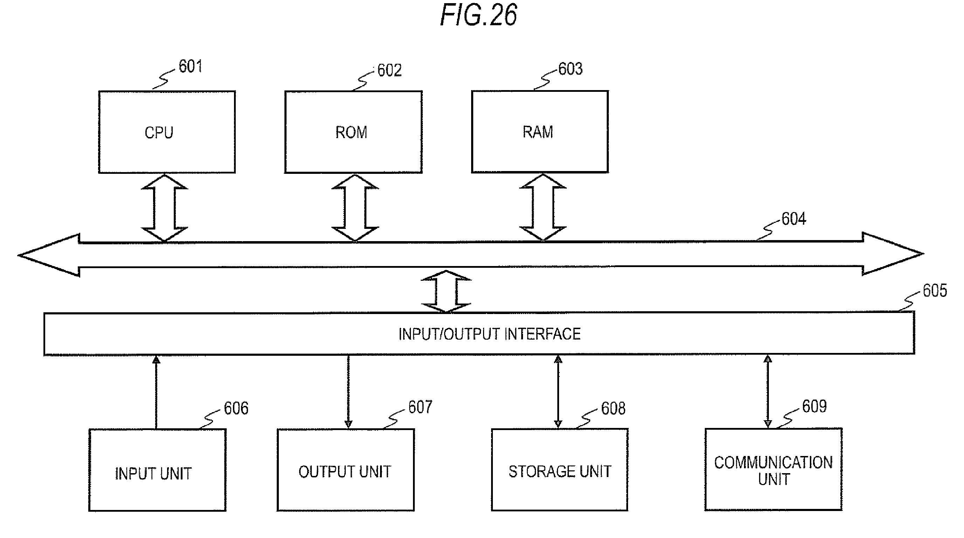

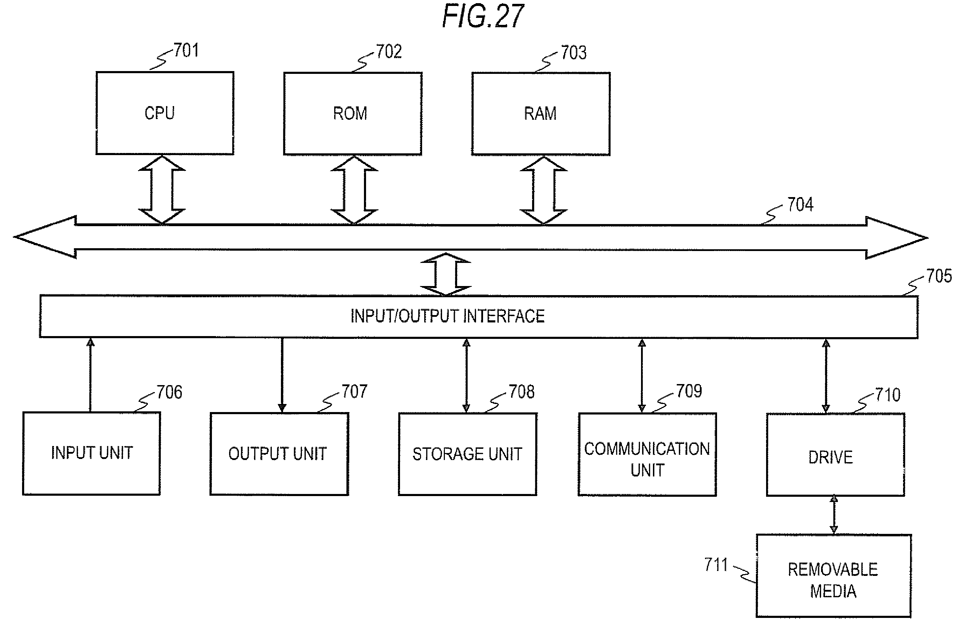

Finally, an example of the hardware configuration of each apparatus which executes the above processing will be described with reference to Figs. 26 and 27.

First, an example of the hardware configuration of a server which executes content providing processing will be described with reference to Fig. 26,

A CPU (Central Processing Unit) 601 functions as a data processor which executes various kinds of processing according to a program stored in a ROM (Read Only Memory) 602 or a storage unit 608.

For example, the CPU 601 executes processing of creating the content in which a digital watermark as the identification information (unique ID) described in each of the above embodiments is recorded, content providing processing, processing of creating and recording the management information, and the like. A program executed by the CPU 601, data, and the like are appropriately stored in a RAM (Random Access Memory) 603. The CPU 601, the ROM 602, and the RAM 603 are connected to each other by a bus 604.

The CPU 601 is connected to an input/output interface 605 through the bus 604. An input unit 606 including various switches, a keyboard, a mouse, and a microphone and an output unit 607 including a display and a speaker are connected to the input/output interface 605. The CPU 601 executes various kinds of processing corresponding to a command input through the input unit 606 and outputs the processing result to the output unit 607.

The storage unit 608 connected to the input/output interface 605 is formed by a hard disk, for example, and stores a program executed by the CPU 601 or various kinds of data, For example, the management information described with reference to Fig. 6 is also recorded in the storage unit 608.

A communication unit 609 communicates with an external apparatus through a network, such as the Internet or a local area network.

Next, an example of the hardware configuration of a client apparatus which receives and reproduces the content will be described with reference to Fig. 27.

A CPU (Central Processing Unit) 701 functions as a data processor which executes various kinds of processing according to a program stored in a ROM (Read Only Memory) 702 or a storage unit 708.

For example, the CPU 701 executes processing for communication with a server, processing of recording the data received from a server in the storage unit 708 (for example, a hard disk), processing of reproducing the data from the storage unit 708 (for example, a hard disk), and the like described in each of the above embodiments.

A program executed by the CPU 701, data, and the like are appropriately stored in a RAM (Random Access Memory) 703. The CPU 701, the ROM 702, and the RAM 703 are connected to each other by a bus 704.

The CPU 701 is connected to an input/output interface 705 through the bus 704. An input unit 706 including various switches, a keyboard, a mouse, and a microphone and an output unit 707 including a display and a speaker are connected to the input/output interface 705, The CPU 701 executes various kinds of processing corresponding to a command input through the input unit 706 and outputs the processing result to the output unit 707.

The storage unit 708 connected to the input/output interface 705 is formed by a hard disk, for example, and stores a program executed by the CPU 701 or various kinds of data. A communication unit 709 communicates with an external apparatus through a network, such as the Internet or a local area network.

A drive 710 connected to the input/output interface 705 drives removable media 711, such as a magnetic disk, an optical disc, a magneto-optical disc, and a semiconductor memory, to acquire various kinds of data, such as the content or a program recorded.

Hereinbefore, the specific embodiment of the present disclosure has been described in detail. However, it is apparent to those skilled in the art that various modifications or substitutions of the above embodiment may be made without departing from the spirit and scope of the present disclosure. That is, since the present disclosure has been disclosed in the form of only illustration, the present disclosure should not be interpreted restrictively. Thus, the scope of the present disclosure should be determined on the basis of the appended claims.

In addition, the series of processing described in this specification may be executed by hardware, software, or a composite configuration of both hardware and software. In the case of executing the processing by the use of software, a program that records processing sequences may be installed in a memory in a computer built in dedicated hardware so as to be executed, or the program may be installed in a general-purpose computer capable of executing various kinds of processing so as to be executed. For example, a program may be recorded in advance in a recording medium. Instead of installing a program from a recording medium into a computer, it is also possible to receive a program through a network, such as a LAN (Local Area Network) or the Internet, and install the program in recording media, such as a built-in hard disk.

In addition, the variety of processing described in the specification may be executed not only in a time-sequential manner but in parallel or separately according to a processing ability of an apparatus that executes the processing or according to the necessity. In addition, the system in this specification is a logic group of a plurality of apparatuses. That is, the system in the specification is not limited to a system in which apparatuses having respective configurations exist in the same casing.

As described above, according to the embodiment of the present disclosure, a configuration allowing verifying the source from the illegally distributed content is provided. In the configuration according to the embodiment of the present disclosure, the content provided to a client is created by selecting data in units of segments from a plurality of additional information recorded content items obtained by recording different additional information items on the content. Different segment columns are selected in units of clients, the management information in which the client information and the segment column information are matched with each other is created, and a client of the content distribution source is specified on the basis of a segment column of the illegally distributed content. In addition, the main encrypted content, which is obtained by setting a data extraction region in units of segments, replacing the data of the data extraction region with dummy data, and performing encryption using a common key, and encrypted sub-content, which is obtained by encrypting the data of the data extraction region using an individual key unique to a client of the content distribution destination, are created and provided to a client.

Through this configuration, it is possible to specify a client, which is a distribution source, on the basis of an individual key or a segment column of both the distributed content items.

The present disclosure contains subject matter related to that disclosed in Japanese Priority Patent Application JP 2010-228736 filed in the Japan Patent Office on October 8, 2010, the entire content of which is hereby incorporated by reference.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
a data processor which creates content to be distributed to a client,
wherein the data processor executes processing of creating content provided to a client by selecting data in units of segments, which are division data of content, from a plurality of additional information recorded content items obtained by recording different additional information items on original content, selects different segment columns in units of content distribution clients in the processing of creating content provided to a client, and creates management information in which client information for identifying a client of a content distribution destination and segment column information indicating a segment selection state of the content provided to a client, which is provided to a corresponding client, are matched with each other and records the management information in a storage unit.

2. The information processing apparatus according to claim 1, wherein the data processor sets a data extraction region in units of segments, which are division data of content, and replaces data of the data extraction region with dummy data and also encrypts sub-content, which includes only the data of the data extraction region, with an individual key unique to a client of the content distribution destination and provides the encrypted sub-content to the client.

3. The information processing apparatus according to claim 2, wherein the data processor records correspondence information between the client information for identifying a client of the content distribution destination and the individual key in the management information.

4. The information processing apparatus according to claim 1, wherein the additional information is recorded as digital watermark data.

5. The information processing apparatus according to claim 1, wherein the data processor acquires a segment column of distributed content by processing of analyzing additional information included in the distributed content and specifies a client as a content distribution destination by processing of collating the acquired segment column information with registration information of the management information.

6. The information processing apparatus according to claim 3,
wherein the data processor specifies a client as an individual key distribution destination by processing of collating a distributed individual key with registration information of the management information.

7. The information processing apparatus according to claim 1, wherein the data processor holds a plurality of different digital watermark recorded content items in which different digital watermark data items are recorded in units of segments, which are division data of content, and creates content, in which a digital watermark data column in units of segments serving as client identification information is set, by selecting segments of different combinations from the plurality of different digital watermark recorded content items in units of distribution processing for the client.

8. The information processing apparatus according to claim 1, wherein the data processor creates main encrypted content, which is obtained by setting a data extraction region in units of segments that are division data of content and by encrypting main content having data of the data extraction region replaced with dummy data using a common key common to a plurality of clients, and encrypted sub-content, which is obtained by encrypting sub-content including only the data of the data extraction region using an individual key unique to a client of the content distribution destination.

9. The information processing apparatus according to claim 8, wherein the data processor creates the content provided to a client by executing processing of combining the main encrypted content with the encrypted sub-content.

10. The information processing apparatus according to claim 8, wherein the data processor creates region information, which indicates a data region of the main encrypted content and a data region of the encrypted sub-content, as information provided to a client.

11. An information processing apparatus comprising:
a data processor which executes content reproduction processing,
wherein the data processor executes content combining processing of combining main content, in which a dummy data region is set in units of segments that are division data of content, with sub-content, which is content corresponding to the dummy data region, and reproduces combined content obtained as a combining result.

12. The information processing apparatus according to claim 11, wherein an encryption key of the main content and an encryption key of the sub-content are different keys, and
the data processor acquires region information indicating a data region of the main content and a data region of the sub-content and performs processing of switching an applied key with reference to the region information.

13. An information processing method executed in an information processing apparatus, comprising:
executing processing of creating content provided to a client by selecting data in units of segments, which are division data of content, from a plurality of additional information recorded content items obtained by recording different additional information items on original content;
selecting different segment columns in units of content distribution clients in the processing of creating content provided to a client; and
creating management information in which client information for identifying a client of a content distribution destination and segment column information indicating a segment selection state of the content provided to a client, which is provided to a corresponding client, are matched with each other and recording the management information in a storage unit,
wherein all of the above processing is executed by a data processor.

14. A program allowing an information processing apparatus to execute information processing, the program causing a data processor to execute:
processing of creating content provided to a client by selecting data in units of segments, which are division data of content, from a plurality of additional information recorded content items obtained by recording different additional information items on original content;
processing of selecting different segment columns in units of content distribution clients in the processing of creating content provided to a client; and
processing of creating management information in which client information for identifying a client of a content distribution destination and segment column information indicating a segment selection state of the content provided to a client, which is provided to a corresponding client, are matched with each other and recording the management information in a storage unit.
